# EUROPEAN PATENT SPECIFICATION

(11) **EP 2 408 247 B1**
(45) Date of publication and mention of the grant of the patent: **31.07.2019**
(21) Application number: 09841325.5
(22) Date of filing: 13.03.2009
(51) Int. Cl.: H04L 5/00, H04L 5/14, H04W 72/04

(54) **METHOD OF RESOURCE DISTRIBUTION, METHOD OF DATA TRANSMISSION, BASE STATION AND TERMINAL**
VERFAHREN ZUR BETRIEBSMITTELVERTEILUNG, VERFAHREN ZUR DATENÜBERTRAGUNG, BASISSTATION UND ENDGERÄT
PROCÉDÉ DE DISTRIBUTION DE RESSOURCES, PROCÉDÉ DE TRANSMISSION DE DONNÉES, STATION DE BASE ET TERMINAL

(43) Date of publication of application: 18.01.2012
(73) Proprietor: Huawei Technologies Co., Ltd., Longgang District Shenzhen, Guangdong 518129 (CN)
(72) Inventor: XUE, Lixia, Shenzhen Guangdong 518129 (CN); YUAN, Bingbing, Shenzhen Guangdong 518129 (CN); CHEN, Xiaobo, Shenzhen Guangdong 518129 (CN)
(74) Representative: Körber, Martin Hans
(86) International application number: PCT/CN2009/070793
(87) International publication number: WO 2010/102456

(56) References cited:
- EP-A2- 0 946 071
- WO-A1-2008/028507
- CN-A- 1 893 341
- CN-A- 101 237 311
- CN-A- 101 309 523
- LG ELECTRONICS: "Considerations on DL/UL Transmission in Asymmetric Carrier Aggregation", 3GPP DRAFT; R1-090211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090107, 7 January 2009 (2009-01-07), XP050318142, [retrieved on 2009-01-07]

## Description

### FIELD OF THE INVENTION

The present invention relates to radio communications technologies, and in particular, to a method for allocating resources, a method for transmitting data, an evolved NodeB (eNB), and a User Equipment (UE).

### BACKGROUND OF THE INVENTION

To support a greater bandwidth and meet requirements of users for a higher peak rate, carrier aggregation (CA) may be performed for multiple carriers, that is, resources of multiple carriers may be simultaneously scheduled for one UE to use.

Because different UEs have different aggregation capabilities and service requirements, a system has different scheduling requirements for different UEs, or the number of uplink carriers and the number of downlink carriers configured in the system are asymmetric, the number of aggregated downlink carriers and the number of aggregated uplink carriers supported by a UE within a period of time may be the same or different. When the number of aggregated downlink carriers supported by the UE is unequal to the number of aggregated uplink carriers supported by the UE, the aggregation is known as UE-specific asymmetric carrier aggregation, which is an important aggregation scenario.

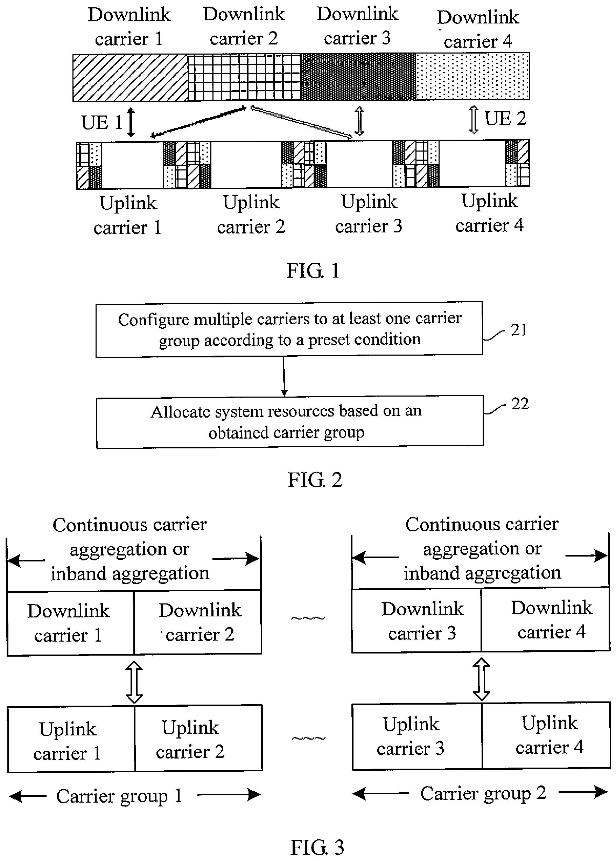

FIG. 1 is a schematic diagram of an application scenario of the UE-specific asymmetric carrier aggregation according to the prior art. Assuming that the number of aggregated uplink carriers and the number of aggregated downlink carriers are both 4, a logical schematic diagram after carrier aggregation is shown in FIG. 1. UE 1 can simultaneously use downlink carriers 1 and 2 to receive downlink data and use uplink carrier 1 to transmit uplink data. UE 2 can simultaneously use downlink carriers 2, 3, and 4 to receive downlink data and use uplink carriers 3 and 4 to transmit uplink data. To support different UE-specific asymmetric carrier aggregation scenarios, such as aggregation of uplink and downlink carriers of UE 1 and UE 2, control channel resources need to be reserved on each uplink carrier for transmitting feedback information that corresponds to data transmission on each downlink carrier. In the prior art, channel resources are allocated in the following way: On each uplink carrier, control channel resources are reserved for transmitting feedback information that corresponds to all downlink carriers, that is, on each uplink carrier, control channel resources are mapped for all downlink data transmissions, so that the control channel resources mapped on each uplink carrier for different downlink carriers do not conflict with each other.

In the prior art, on each uplink carrier, control channel resources are reserved for transmitting feedback information that corresponds to all downlink carriers. Therefore, overhead of reserved resources is high, and resource utilization is reduced.

The document 3GPP TSG RAN WG1 Meeting #55bis, Ljubljana, Slovenia, January 12-16, 2009 introduces an asymmetric DL/UL carrier aggregation and control information and data transmission.

The document EP 0 946 071 A2 discloses a cellular system and frequency carrier allocation method therefore.

### SUMMARY OF THE INVENTION

Embodiments of the present invention provide a method for allocating resources, a method for transmitting data, an eNB, and a UE to improve resource utilization in multi-carrier aggregation.

The invention is solely defined by the appended claims. In the following, references to embodiments not falling within the scope of the claims are to be understood as examples useful for understanding the invention.

An embodiment of the present invention provides a method for allocating resources. The method for allocating resources includes: defining multiple carriers as at least one carrier group according to a preset condition, wherein the preset condition comprises at least one of the followings: defining carriers that have same cell coverage as one carrier group; and defining multiple carriers that have a same uplink/downlink timeslot ratio as one carrier group; and allocating system resources for an obtained carrier group; notifying a user equipment, UE, of system resource allocation information, so that the system resources corresponding to the allocation information are used for communication with the UE; wherein the defining multiple carriers as the at least one carrier group according to the preset condition comprises: performing, according to the preset condition, definition for an uplink carrier and a downlink carrier corresponding to the uplink carrier to obtain the at least one carrier group, wherein each carrier group comprises at least one uplink carrier and a downlink carrier corresponding to the uplink carrier; or grouping, according to the preset condition, the uplink carriers to obtain at least one uplink carrier subgroup; grouping, according to the preset condition, the downlink carriers to obtain at least one downlink carrier subgroup; and establishing a mapping relationship between the uplink carrier subgroup and the downlink carrier subgroup to obtain the at least one carrier group, wherein each carrier group comprises at least one uplink carrier subgroup and at least one downlink carrier subgroup, and the mapping relationship between the uplink carrier subgroup and the downlink carrier subgroup is an original setting in a system or is dynamically allocated in a system application.

Another embodiment of the present invention provides an eNB. The eNB includes: a carrier group defining module, configured to define multiple carriers as at least one carrier group according to a preset condition, wherein the preset condition comprises at least one of the followings: defining carriers that have same cell coverage as one carrier group; and defining multiple carriers that have a same uplink/downlink timeslot ratio as one carrier group; and a resource allocating module, configured to allocate system resources for an obtained carrier group; a resource allocation information notifying module (143), configured to notify a User Equipment, UE, of corresponding system resource allocation information, so that the system resources corresponding to the allocation information are used for communication with the UE; wherein the carrier group defining module is configured to the defining multiple carriers as the at least one carrier group according to the preset condition comprises: the carrier group defining module is configured to perform, according to the preset condition, definition for an uplink carrier and a downlink carrier corresponding to the uplink carrier to obtain the at least one carrier group, wherein each carrier group comprises at least one uplink carrier and a downlink carrier corresponding to the uplink carrier; or the carrier group defining module is configured to group, according to the preset condition, the uplink carriers to obtain at least one uplink carrier subgroup; group, according to the preset condition, the downlink carriers to obtain at least one downlink carrier subgroup; and establish a mapping relationship between the uplink carrier subgroup and the downlink carrier subgroup to obtain the at least one carrier group, wherein each carrier group comprises at least one uplink carrier subgroup and at least one downlink carrier subgroup, and the mapping relationship between the uplink carrier subgroup and the downlink carrier subgroup is an original setting in a system or is dynamically allocated in a system application.

Another embodiment of the present invention provides a User Equipment (UE), characterized in comprising: an allocation information receiving module, configured to receive system resource allocation information, wherein the allocation information is obtained by a network by allocating system resources for defined multiple carrier groups; and a communicating module, configured to use the system resources corresponding to the allocation information to communicate with the network; wherein, multiple carriers are defined as at least one carrier group according to a preset condition, wherein the preset condition comprises at least one of the followings: defining carriers that have same cell coverage as one carrier group; and defining multiple carriers that have a same uplink/downlink timeslot ratio as one carrier group, and a procedure of defining the multiple carriers as the at least one carrier group according to the preset condition comprises: performing, according to the preset condition, definition for an uplink carrier and a downlink carrier corresponding to the uplink carrier to obtain the at least one carrier group, wherein each carrier group comprises at least one uplink carrier and a downlink carrier corresponding to the uplink carrier; or grouping, according to the preset condition, the uplink carriers to obtain at least one uplink carrier subgroup; grouping, according to the preset condition, the downlink carriers to obtain at least one downlink carrier subgroup; and establishing a mapping relationship between the uplink carrier subgroup and the downlink carrier subgroup to obtain the at least one carrier group, wherein each carrier group comprises at least one uplink carrier subgroup and at least one downlink carrier subgroup, and the mapping relationship between the uplink carrier subgroup and the downlink carrier subgroup is an original setting in a system or is dynamically allocated in a system application.

Preferable implementations of the embodiments are disclosed in the dependent claims.

In the embodiments of the present invention, the network may configure a set of multiple carriers compliant with a particular relationship to a carrier group, and allocate system resources based on the carrier group. This helps to reduce extra consumption of system resources during communication between the UE and the network and improve utilization of system resources.

### BRIEF DESCRIPTION OF THE DRAWINGS

To describe technical solutions in the embodiments of the present invention or in the prior art more clearly, the following briefly describes the accompanying drawings required in the description of the embodiments of the present invention or the prior art. Apparently, the accompanying drawings illustrate only some exemplary embodiments of the present invention, and those skilled in the art can derive other drawings from these drawings without creative efforts.
FIG. 1 is a schematic diagram of an application scenario of UE-specific asymmetric carrier aggregation according to the prior art;
FIG. 2 is a flowchart of a method for allocating resources according to a first embodiment of the present invention;
FIG. 3 is a schematic diagram of an application scenario of multi-carrier group configuration according to a second embodiment of the present invention;
FIG. 4a is a schematic diagram of a first application scenario of multi-carrier group configuration according to a third embodiment of the present invention;
FIG. 4b is a schematic diagram of a second application scenario of multi-carrier group configuration according to the third embodiment of the present invention;
FIG. 5 is a schematic diagram of an application scenario of multi-carrier group configuration according to a fourth embodiment of the present invention;
FIG. 6 is a schematic diagram of an application scenario of multi-carrier group configuration according to a fifth embodiment of the present invention;
FIG. 7 is a schematic diagram of an application scenario of multi-carrier group configuration according to a sixth embodiment of the present invention;
FIG. 8 is a schematic diagram of an application scenario of multi-carrier group configuration according to a seventh embodiment of the present invention;
FIG. 9 is a schematic diagram of an application scenario of multi-carrier group configuration according to an eighth embodiment of the present invention;
FIG. 10a is a schematic diagram of a first application scenario of a method for allocating resources according to a ninth embodiment of the present invention;
FIG. 10b is a schematic diagram of a second application scenario of a method for allocating resources according to the ninth embodiment of the present invention;
FIG. 11 is a schematic diagram of an application scenario of a method for allocating resources according to a tenth embodiment of the present invention;
FIG. 12 is a schematic diagram of an application scenario of a method for allocating resources according to an eleventh embodiment of the present invention;
FIG. 13a is a schematic diagram of a first application scenario of a method for allocating resources according to a twelfth embodiment of the present invention;
FIG. 13b is a schematic diagram of a second application scenario of a method for allocating resources according to the twelfth embodiment of the present invention;
FIG. 14 is a schematic structural diagram of an eNB according to a seventeenth embodiment of the present invention; and
FIG. 15 is a schematic structural diagram of a UE according to an eighteenth embodiment of the present invention.

### DETAILED DESCRIPTION OF THE EMBODIMENTS

The invention is solely defined by the appended claims.

### Embodiment 1

FIG. 2 is a flowchart of a method for allocating resources according to a first embodiment of the present invention. As shown in FIG. 2, the method in this embodiment includes:
21. configuring multiple carriers to at least one carrier group according to a preset condition; and
22. allocating radio resources based on an obtained carrier group.

In the process of implementing the embodiments of the present invention, the inventor finds that independent design of each carrier in a multi-carrier system enables flexible multi-carrier aggregation configuration for a network but causes the network or a UE to consume extra resources. For example, an uplink carrier needs to reserve PUCCH resources for transmitting feedback information of a downlink carrier; or, each downlink carrier needs to reserve Physical Hybrid ARQ Indicator Channel (PHICH) resources, where ARQ is short for Automatic Repeat Request; or, carrier-related information such as a carrier bandwidth and frequency may need to be broadcast and sent on each carrier, and therefore some resources are occupied on each carrier; or, due to a long distance between adjacent spectrums of aggregated carriers, when a UE measures multiple carriers and sends feedback information, long-time detection is needed or multiple Radio Frequency (RF) links are activated, so that a lot of battery power of the UE is consumed. These problems obviously reduce utilization of system resources. Therefore, the multi-carrier system needs to strike a balance between flexibility of multi-carrier aggregation and the utilization of system resources, that is, reduce consumption of system resources while implementing multi-carrier aggregation, so as to improve the utilization of system resources.

In step 21 of the foregoing technical solution, a preset condition for carrier aggregation may be set according to factors such as an aggregation capability and a service requirement of a UE, spectrum distribution and coverage of carriers, and a requirement and particularity of the network, and carriers may be configured to at least one carrier group according to the preset condition for carrier aggregation.

If the multiple carriers used to be performed group configuration include uplink carriers and downlink carriers, different carrier group configuration methods may be used. For example, an uplink carrier and a downlink carrier bound with the uplink carrier may be combined for consideration and uniformly configured according to a preset relationship to obtain at least one carrier group, and each carrier group includes at least one uplink carrier and a downlink carrier corresponding to the uplink carrier.

Or, uplink carriers and downlink carriers may be separately considered and configured according to a preset relationship to obtain at least one carrier group. This configuration method may specifically include: according to a preset relationship, pre-grouping uplink carriers to obtain at least one uplink carrier subgroup; according to a preset relationship, pre-grouping downlink carriers to obtain at least one downlink carrier subgroup; and establishing a mapping relationship between the uplink carrier subgroup and the downlink carrier subgroup to obtain at least one carrier group. The mapping relationship between the uplink carrier subgroup and the downlink carrier subgroup may be an original setting in a system or be dynamically allocated in a system application. One application scenario is as follows: The number of uplink carrier subgroups is equal to the number of downlink carrier subgroups; in this case, a one-to-one mapping relationship may be established between uplink carrier subgroups and downlink carrier subgroups that have the same sequence number. Another application scenario of a method of establishing the mapping relationship between the uplink carrier subgroup and the downlink carrier subgroup is as follows: The number of uplink carrier subgroups is different from the number of downlink carrier subgroups. In this case, uplink and downlink carrier subgroups need to be coordinated. When allocating resources such as reserving or mapping resources, the system needs to determine the resources according to the mapping relationship between uplink carrier subgroups and downlink carrier subgroups. Therefore, the mapping relationship between uplink carrier subgroups and downlink carrier groups may be set according to an actual requirement.

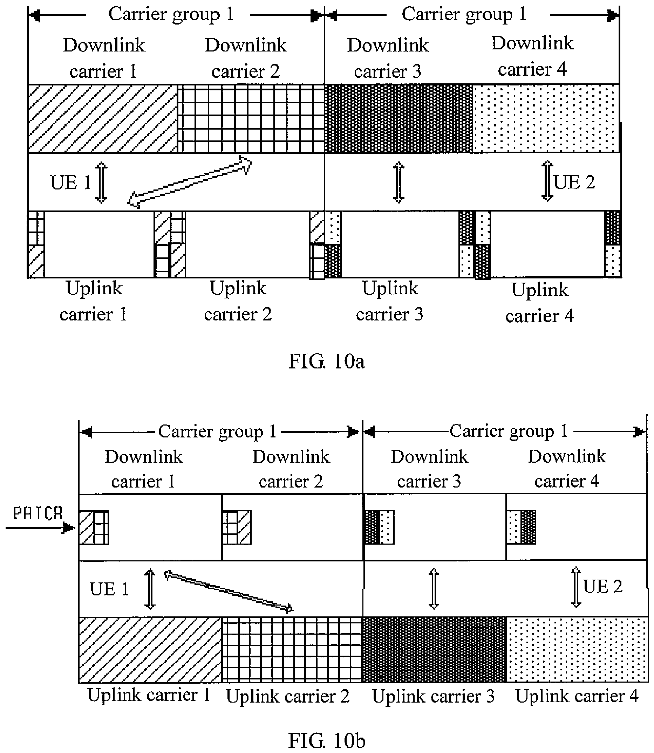

Application scenarios of preset conditions for multi-carrier group configuration are described in the second embodiment to the eighth embodiment and FIG. 3 to FIG. 9. In the application scenarios based on various preset conditions, a group configuration policy for uplink carriers and downlink carriers may be uniform configuration or separate configuration as described above, and details are not described hereunder. Application scenarios of radio resource allocation based on a carrier group are described in the ninth embodiment to the sixteenth embodiment and FIG. 10a to FIG. 13b.

In the embodiment of the present invention, carriers compliant with a particular relationship are aggregated to a carrier group, and system resources are allocated based on the carrier group. This helps to reduce extra consumption of system resources and improve the utilization of system resources.

### Embodiment 2

FIG. 3 is a schematic diagram of an application scenario of multi-carrier group configuration according to a second embodiment of the present invention. In this embodiment, multiple continuous carriers or multiple discrete carriers that belong to the same band may be configured to one carrier group. An example of multiple discrete carriers that belong to the same band is: multiple carriers that may be discretely distributed, each having a center frequency in a proximately same frequency range, for example, 3.5 GHz.

Configuring multiple continuous carriers that have continuous spectrum distribution or multiple discrete carriers that belong to the same band to one carrier group may bring the following benefits: A UE may use one RF link structure to implement data reception and transmission; in other words, probability for the UE to support aggregation of such carriers is high. Due to some factors such as limitations in hardware implementation, a UE is more likely to use multiple RF link structures to aggregate discrete carriers that belong to different bands. Therefore, discrete carriers that belong to different bands may be configured to multiple carrier groups.

In the application scenario shown in FIG. 3, with respect to spectrum distribution, uplink carriers 1 and 2 are two uplink carriers with continuous spectrum distribution, and uplink carriers 3 and 4 are two uplink carriers with continuous spectrum distribution; the spectrum distribution of uplink carrier 1 or 2 and uplink carrier 3 or 4 is discrete; similarly, downlink carriers 1 and 2 are two downlink carriers with continuous spectrum distribution, and downlink carriers 3 and 4 are two downlink carriers with continuous spectrum distribution; the spectrum distribution of downlink carrier 1 or 2 and downlink carrier 3 or 4 is discrete; uplink carriers 1 and 2 are aggregated continuous carriers, and downlink carriers 1 and 2 are aggregated continuous carriers; uplink carriers 3 and 4 are aggregated continuous carriers, and downlink carriers 3 and 4 are aggregated continuous carriers; uplink carriers 1 and 2 respectively correspond to downlink carriers 1 and 2; uplink carriers 3 and 4 respectively correspond to downlink carriers 3 and 4. Therefore, multiple continuous carriers or multiple discrete carriers that belong to the same band may be aggregated to one carrier group. For example, uplink carriers 1 and 2 and corresponding downlink carriers 1 and 2 are collectively configured to one carrier group, namely, carrier group 1; uplink carriers 3 and 4 and corresponding downlink carriers 3 and 4 are collectively configured to one carrier group, namely, carrier group 2.

In this embodiment, multiple continuous carriers that have continuous spectrum distribution or multiple discrete carriers that belong to the same band are configured to one carrier group; multiple discrete carriers that belong to different bands are configured to multiple carrier groups. In this way, the hardware implementation for multi-carrier aggregation is simplified.

### Embodiment 3

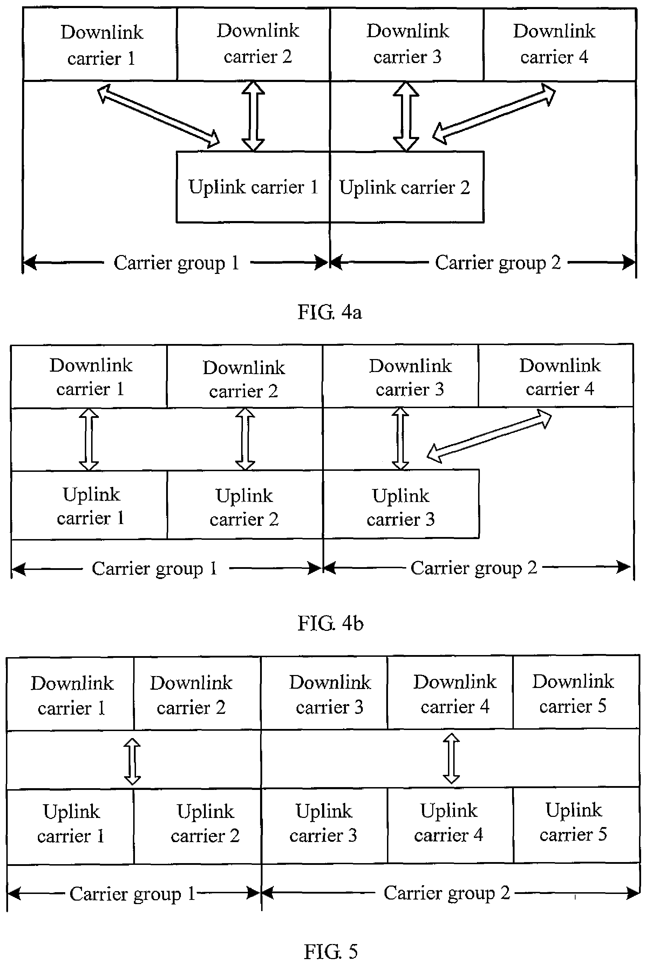

FIG. 4a is a schematic diagram of a first application scenario of multi-carrier group configuration according to a third embodiment of the present invention. FIG. 4b is a schematic diagram of a second application scenario of multi-carrier group configuration according to the third embodiment of the present invention. In this embodiment, a set of multiple carriers compliant with a mapping relationship that is pre-established between uplink carriers and downlink carriers by a system may be configured to one carrier group.

Depending on a source of a spectrum of each carrier and distribution of occupied bands, the number of aggregated uplink carriers supported and the number of aggregated downlink carriers supported may be the same or different. Hereunder, a scenario where the number of aggregated uplink carriers supported and the number of aggregated downlink carriers supported are the same is defined as cell-specific symmetric carrier aggregation; a scenario where the number of aggregated uplink carriers supported and the number of aggregated downlink carriers supported are different is defined as cell-specific asymmetric carrier aggregation. In cell-specific symmetric carrier aggregation, generally there is a one-to-one mapping relationship between uplink carriers and downlink carriers. In cell-specific asymmetric carrier aggregation, when multiple carriers need to be grouped, the system may pre-establish a particular mapping relationship between uplink carriers and down carriers and configure a set of uplink carriers and down carriers compliant with the particular mapping relationship to one carrier group.

In a first application scenario of cell-specific asymmetric carrier aggregation in this embodiment, it is assumed that the number of aggregated uplink carriers supported is 2 and that the number of aggregated downlink carriers supported is 4. After the uplink and downlink carriers are aggregated in this scenario, a logical position relationship may be shown in FIG. 4a.

Although the number of aggregated uplink carriers supported and the number of aggregated downlink carriers supported are different, each downlink carrier requires a corresponding uplink carrier for sending feedback information of the downlink carrier, and each uplink carrier requires a corresponding downlink carrier for sending feedback information of the uplink carrier. Therefore, the system may pre-establish a particular mapping relationship between uplink carriers and downlink carriers. In the embodiment of the present invention, uplink carriers and downlink carriers bound with the uplink carriers are expressed as: uplink carriers and downlink carriers compliant with a particular mapping relationship. Downlink feedback information or uplink feedback information may include an Acknowledgement (ACK) message or a Negative Acknowledgement (NACK) message. As shown in FIG. 4a, the system may pre-establish a mapping relationship between downlink carriers 1 and 2 and uplink carrier 1 and a mapping relationship between downlink carriers 3 and 4 and uplink carrier 2. After the system establishes particular mapping relationships between uplink carriers and downlink carriers, the feedback information of downlink carriers 1 and 2 may be sent through uplink carrier 1, and the feedback information of uplink carrier 1 may be sent through downlink carrier 1 and/or downlink carrier 2; the feedback information of downlink carriers 3 and 4 may be sent through uplink carrier 2, and the feedback information of uplink carrier 2 may be sent through downlink carrier 3 and/or downlink carrier 4. Based on the particular mapping relationships pre-established by the system, that is, the existent binding relationships between uplink carriers and downlink carriers before carrier group configuration, when a method in the embodiment of the present invention is used for multi-carrier group configuration, downlink carriers 1 and 2 and corresponding uplink carrier 1 may be collectively configured to one carrier group, namely, carrier group 1; downlink carriers 3 and 4 and corresponding uplink carrier 2 may be collectively configured to another carrier group, namely, carrier group 2.

In a second application scenario of cell-specific asymmetric carrier aggregation in this embodiment, it is assumed that the number of aggregated uplink carriers supported is 3 and that the number of aggregated downlink carriers supported is 4. After the uplink and downlink carriers are aggregated in this scenario, a logical position relationship may be shown in FIG. 4b. The system may pre-establish a mapping relationship between downlink carrier 1 and uplink carrier 1, a mapping relationship between downlink carrier 2 and uplink carrier 2, and a mapping relationship between downlink carriers 3 and 4 and uplink carrier 3. Based on the particular mapping relationships pre-established by the system, during multi-carrier group configuration, downlink carriers 1 and 2 and corresponding uplink carriers 1 and 2 compliant with particular mapping relationships may be aggregated to one carrier group, namely, carrier group 1; and downlink carriers 3 and 4 and corresponding uplink carrier 3 may be aggregated to another carrier group, namely, carrier group 2. It is understandable to those skilled in the art that: according to an actual application requirement, carrier group 1 in the foregoing technical solution may be split into two carrier groups as required, or downlink carrier 1 and corresponding uplink carrier 1 may be aggregated to one carrier group, while downlink carrier 2, and downlink carriers 3 and 4, and corresponding uplink carriers 2 and 3 are aggregated to another carrier group.

In this embodiment, multiple carriers compliant with a particular mapping relationship that is pre-established between uplink carriers and downlink carriers by the system are configured to one carrier group. This helps to improve resource utilization during system resource allocation based on a carrier group.

### Embodiment 4

FIG. 5 is a schematic diagram of an application scenario of multi-carrier group configuration according to a fourth embodiment of the present invention. In this embodiment, multiple carriers may be grouped according to capabilities and/or service requirements of UEs.

When the number of aggregated uplink and downlink carriers supported is definite, a degree of carrier aggregation supported by different UEs in a system may vary depending on capabilities of the UEs. For example, with respect to downlink carrier aggregation supported by a UE, the UE may use only one downlink carrier to receive data or simultaneously use two or more downlink carriers to receive data; likewise, with respect to uplink carrier aggregation supported by the UE, the UE may use only one uplink carrier to transmit data or simultaneously use two or more uplink carriers to transmit data. In addition, considering service requirements of UEs, different UEs require different system bandwidths to meet respective service requirements. For example, a UE may require a carrier with a bandwidth of 20 MHz to provide a service, or may require a carrier with a bandwidth greater than 20 MHz to provide a service. In this case, the system may make a statistical analysis on the capabilities and/or service requirements of UEs and determine a good grouping mode for carrier aggregation according to a statistical analysis result.

In the application scenario shown in FIG. 5, assuming that the bandwidth of each carrier is 20 MHz, a maximum bandwidth of 100 MHz may be obtained after five carriers are aggregated. If a result of the statistical analysis on the capabilities and/or service requirements of UEs before carrier group configuration shows that most UEs in the system support or require aggregation of two or three carriers, the system may configure continuous downlink carriers 1 and 2 and corresponding continuous uplink carriers 1 and 2 to one carrier group, namely, carrier group 1, and configure continuous downlink carriers 3, 4, and 5, and corresponding continuous uplink carriers 3, 4, and 5 to another carrier group, namely, carrier group 2.

In this embodiment, the system groups multiple carriers according to the capabilities and/or service requirements of UEs, which may limit reserved radio resources in a carrier group. This helps to improve utilization of reserved resources and effectively reduce waste of resources.

### Embodiment 5

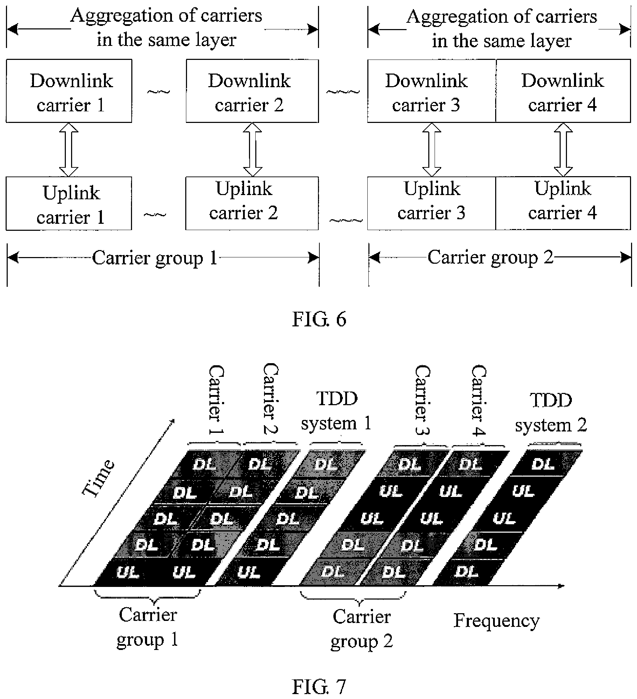

FIG. 6 is a schematic diagram of an application scenario of multi-carrier group configuration according to a fifth embodiment of the present invention. In this embodiment, multiple carriers with the same cell coverage may be configured to one carrier group.

In an asynchronous network system, a necessary interference coordination mechanism needs to be used to suppress inter-system interference. Therefore, transmit power of each carrier may include different levels. In this case, cell coverage of each carrier may be different. In addition, because a spectrum allocated for International Mobile Telecommunication (IMT) is distributed in different bands, the bands that are occupied or may have aggregated carriers are discrete. Due to a difference between spectrum bands of carriers, coverage of each carrier may vary.

Evidently, because the transmit power and the band of each carrier are different, cell coverage of each carrier may vary. In this embodiment, spectrum resources with the same cell coverage are defined as one layer, and spectrum resources with different cell coverage are defined as different layers; multiple carriers in the same layer are configured, that is, multiple carriers with the same cell coverage may be configured to one carrier group; here, "same" means "completely the same" or "proximately the same".

In the application scenario shown in FIG. 6, it is assumed that there are uplink carriers 1, 2, 3, and 4, and downlink carriers 1, 2, 3, and 4; spectrums occupied by downlink carriers 1 and 2 are discrete, and transmit power levels are different, but downlink carriers 1 and 2 have the same cell coverage and respectively correspond to uplink carriers 1 and 2; spectrums occupied by downlink carriers 3 and 4 are continuous, and downlink carriers 3 and 4 have the same transmit power level and the same cell coverage, and respectively correspond to uplink carriers 3 and 4. In this case, downlink carriers 1 and 2 with the same cell coverage, and corresponding uplink carriers 1 and 2 may be configured to one carrier group, namely, carrier group 1; downlink carriers 3 and 4 with the same cell coverage, and corresponding uplink carriers 3 and 4 may be configured to another carrier group, namely, carrier group 2.

In this embodiment, multiple carriers with the same cell coverage are configured to one carrier group, which enables a system to easily use a carrier aggregation feature, and especially enables a UE at a cell edge to support carrier aggregation. This improves a service rate of the UE at the cell edge and meets a requirement of the UE on data transmission performance. In this embodiment, when the UE at the cell edge performs a cell handover, the cell handover may apply to all carriers in the carrier group according to a conventional handover mechanism, which helps to ensure the service rate and data transmission continuity for the UE at the cell edge.

The multi-carrier group configuration methods provided in embodiments corresponding to FIG. 3 to FIG. 6 may be separately applied to or combined and applied to a multi-carrier system. For example, the methods may be used to configure multiple carriers to a carrier group in a multi-carrier Frequency Division Duplex (Frequency Division Duplex, FDD) system or a multi-carrier Time Division Duplex (Time Division Duplex, TDD) system. For the multi-carrier TDD system, because each carrier includes uplink carrier timeslots and downlink carrier timeslots, to simplify design, each carrier group may be configured only based on carriers, that is, the configuration considers whether a carrier belongs to a carrier group, without considering the uplink timeslots and downlink timeslots in each carrier.

In addition, for the multi-carrier TDD system, the configuration may consider whether uplink/downlink timeslot ratios configured on different carriers are the same, and a method of the embodiment corresponding to FIG. 7 is used to configure multiple carriers to a carrier group.

### Embodiment 6

FIG. 7 is a schematic diagram of an application scenario of multi-carrier group configuration according to a sixth embodiment of the present invention. In this embodiment, multiple carriers with the same uplink/downlink timeslot ratio may be configured to one carrier group.

In the application scenario shown in FIG. 7, a horizontal axis represents frequency, and a vertical axis represents time; DL represents a downlink timeslot, and UL represents an uplink timeslot. It is assumed that the uplink/downlink timeslot ratios of carriers 1 and 2 are both 1:4, and that the uplink/downlink timeslot ratios of carriers 3 and 4 are both 2:3. In this case, carriers 1 and 2 with the same uplink/downlink timeslot ratio are configured to one carrier group, namely, carrier group 1; carriers 3 and 4 with the same uplink/downlink timeslot ratio are configured to another carrier group, namely, carrier group 2.

In this embodiment, multiple carriers with the same uplink/downlink timeslot ratio are configured to one carrier group. Therefore, in a transmission time unit, for example, a subframe, it may be ensured that all carriers in the carrier group are only uplink timeslots or only downlink timeslots. That is, it is ensured that each carrier in the carrier group use the same Hybrid Automatic Retransmission Request (HARQ) timing mechanism. For example, when a UE is capable of supporting asymmetric carrier aggregation in the carrier group and supports data transmission through one uplink carrier, because the uplink/downlink timeslot ratios of carriers in the carrier group within a transmission time unit are the same, timeslots used by the UE for transmitting feedback information corresponding to data transmitted on multiple downlink carriers are consistent, which helps to improve utilization of resources reserved by a system and simplify system implementation. In addition, aggregating multiple carriers with the same uplink/downlink timeslot ratio to one carrier group in this embodiment helps to reduce interference between different TDD systems. For example, for effective coexistence of different TDD systems, the uplink/downlink timeslot ratios of carriers in adjacent bands of each TDD system need to be approximately the same. Therefore, according to an actual spectrum network deployment requirement, different carriers may be aggregated to different carrier groups, and the uplink/downlink timeslot ratios of carriers in each carrier group are the same, so that strong interference between a system in a transmitting timeslot and a system in a receiving timeslot can be avoided.

### Embodiment 7

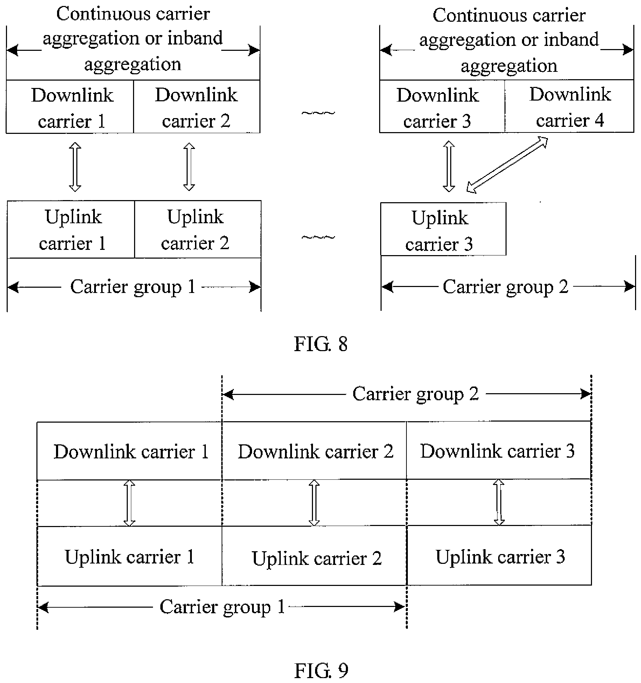

FIG. 8 is a schematic diagram of an application scenario of multi-carrier group configuration according to a seventh embodiment of the present invention. In this embodiment, the multi-carrier group configuration methods provided by the second embodiment and third embodiment are combined and applied to multi-carrier aggregation. That is, multiple continuous carriers or multiple discrete carriers that belong to the same band are configured to one carrier group, and multiple carriers compliant with a mapping relationship that is pre-established between uplink carriers and downlink carriers by a system are also configured to this carrier group.

Those skilled in the art may understand that, on the basis of the foregoing technical solutions, methods corresponding to the second embodiment to the fifth embodiment may be combined in any way and applied to an FDD system to implement multi-carrier group configuration. In addition, methods corresponding to the second embodiment to the sixth embodiment may be combined in any way and applied to an FDD system to implement multi-carrier group configuration. The specific implementation is not described.

### Embodiment 8

FIG. 9 is a schematic diagram of an application scenario of multi-carrier group configuration according to an eighth embodiment of the present invention. In this embodiment, a carrier may be configured to multiple carrier groups with other carriers, so that carriers included in different carrier groups are partly the same. That is, one carrier may belong to two or more carrier groups.

In the application scenario shown in FIG. 9, it is assumed that there are uplink carriers 1, 2, and 3, and downlink carriers 1, 2, and 3. In this scenario, according to an actual application requirement, downlink carriers 1 and 2 and corresponding uplink carriers 1 and 2 are configured to one carrier group, namely, carrier group 1; downlink carriers 2 and 3 and corresponding uplink carriers 2 and 3 are configured to another carrier group, namely, carrier group 2. In this way, carrier groups 1 and 2 both include uplink carrier 2 and downlink carrier 2.

In this embodiment, carrier group configuration may be performed according to an actual application requirement, so that one carrier may belong to two or more carrier groups. This improves flexibility of carrier aggregation and helps to meet different application requirements.

After one or more methods provided in the preceding embodiments are applied to perform multi-carrier group configuration, one or more method for allocating resources described below may be used to allocate system resources based on a carrier group.

### Embodiment 9

FIG. 10a is a schematic diagram of a first application scenario of a method for allocating resources according to a ninth embodiment of the present invention. FIG. 10b is a schematic diagram of a second application scenario of a method for allocating resources according to the ninth embodiment of the present invention.

In this embodiment, for an application scenario of a multi-carrier FDD system, control channel resources on a first carrier in a carrier group are reserved only for a second carrier in the carrier group and used for transmitting uplink control information or downlink control information. The first carrier may be an uplink carrier, and the second carrier may be a downlink carrier corresponding to the first carrier. In this case, system resources to be reserved are PUCCH resources used for transmitting uplink control information, and the uplink control information may include uplink feedback information corresponding to downlink data transmission scheduled by a downlink carrier, and/or a reference signal transmitted for measuring quality of a channel for uplink scheduling. Or, the first carrier may be a downlink carrier, and the second carrier may be an uplink carrier corresponding to the first carrier. In this case, the system resources to be reserved are PHICH resources used for transmitting downlink control information, and the downlink control information may include feedback information corresponding to data transmitted on the uplink carrier.

In this embodiment, for an application scenario of a multi-carrier TDD system, control channel resources on a first timeslot in a carrier group are reserved only for a second timeslot in the carrier group and used for transmitting uplink control information or downlink control information. The first timeslot may be an uplink timeslot, and the second timeslot may be a downlink timeslot corresponding to the first timeslot. Or, the first timeslot may be a downlink timeslot, and the second timeslot may be an uplink timeslot corresponding to the first timeslot.

A technical solution to resource allocation in this embodiment is described in detail by taking the multi-carrier FDD system as an example below. A technical solution to resource allocation in the multi-carrier TDD system is similar and is not described here.

A UE and an eNB may communicate with each other based on a HARQ technology during transmission and reception of data on each carrier. For example, the eNB sends encoded and modulated transport block data to the UE; after receiving the data, the UE performs a Cyclic Redundancy Check (CRC) on the data; if the data passes the CRC, the UE sends ACK feedback information to the eNB to notify the eNB of successful decoding; if the data fails the CRC, the UE sends NACK feedback information to the eNB to request the eNB to retransmit a packet of a previous frame.

On a downlink for data transmission, downlink data sent by the eNB to the UE is transmitted on a PDSCH; according to demodulation and detection conditions of received data, the UE uses a PUCCH to send ACK/NACK feedback information corresponding to the data transmitted on the PDSCH. On an uplink for data transmission, the UE uses a PUSCH to transmit data to the eNB; according to the demodulation and detection conditions of received data, the eNB uses a PHICH to send ACK/NACK feedback information corresponding to the data transmitted on the PUSCH.

In a process of transmitting and receiving data on each carrier, HARQ control is separately performed on the data transmitted on each carrier, that is, each carrier has its transport block. Therefore, a receiver needs to send ACK/NACK feedback information according to the demodulation and detection conditions of each transport block. Hence, on uplink carriers in the system, PUCCH resources need to be reserved for transmitting uplink control information; on downlink carriers, PHICH resources need to be reserved for transmitting downlink control information, that is, feedback information corresponding to data transmitted on the uplink carriers. If PUCCH resources required for transmitting uplink control information are reserved on each uplink carrier for all downlink carriers, or PHICH resources required for transmitting downlink control information are reserved on each downlink carrier for all uplink carriers, overhead of resources reserved in the system is high. In this embodiment, based on a carrier group obtained after multi-carrier group configuration, corresponding channel resources are reserved only for carriers in the carrier group.

In the application scenario shown in FIG. 10a, uplink carriers 1 and 2 in carrier group 1 both reserve PUCCH resources for each downlink carrier in the carrier group, namely, downlink carriers 1 and 2, and the reserved PUCCH resources are used for transmitting uplink control information; uplink carriers 1 and 2 in carrier group 1 do not need to reserve PUCCH resources for downlink carriers 3 and 4 in carrier group 2. In the application scenario shown in FIG. 10b, downlink carriers 1 and 2 in carrier group 1 both reserve PHICH resources for each uplink carrier in the carrier group, namely, uplink carriers 1 and 2, and the reserved PHICH resources are used for transmitting downlink control information, namely, feedback information corresponding to data transmitted on uplink carriers 1 and 2; downlink carriers 1 and 2 in carrier group 1 do not need to reserve PHICH resources for uplink carriers 3 and 4 in carrier group 2. Therefore, resources reserved for carriers in another carrier group are saved.

In this embodiment, after a network allocates resources based on a carrier group, the UE is notified of system resource allocation information, so that a network device (such as the eNB) and the UE can implement communication based on reserved control channel resources, such as data transmission, data reception, and data processing.

A method for the eNB and UE to transmit data on reserved control channel resources may include: On a PUCCH of each uplink carrier/timeslot in a carrier group, after carrying uplink feedback information corresponding to downlink data transmission scheduled by a downlink carrier/timeslot in the carrier group, and/or a reference signal transmitted for measuring quality of the channel for uplink scheduling, the eNB transmits the information and reference signal; on a PDCCH of each downlink carrier/timeslot in a carrier group, after carrying uplink feedback information corresponding to data transmitted on an uplink carrier/timeslot in the carrier group, the UE transmits the information.

A method for the eNB and UE to receive and process data on reserved control channel resources includes: On the PUCCH of each uplink carrier/timeslot in a carrier group, the eNB receives and detects the uplink feedback information corresponding to the downlink data transmission scheduled by the downlink carrier/timeslot in the carrier group, and/or the reference signal transmitted for measuring quality of the channel for uplink scheduling; on the PDCCH of each downlink carrier/timeslot in a carrier group, the UE receives and detects the downlink feedback information corresponding to the data transmitted on the uplink carrier/timeslot in the carrier group.

In this embodiment, corresponding channel resources are reserved only for carriers in a carrier group during system resource allocation, and after system resources are allocated based on the carrier group, the UE is notified of the system resource allocation information. Further, a transmission method and a reception method used on control channels by the eNB and UE are made clear. This reduces the overhead of reserved resources and optimizes utilization of system resources.

### Embodiment 10

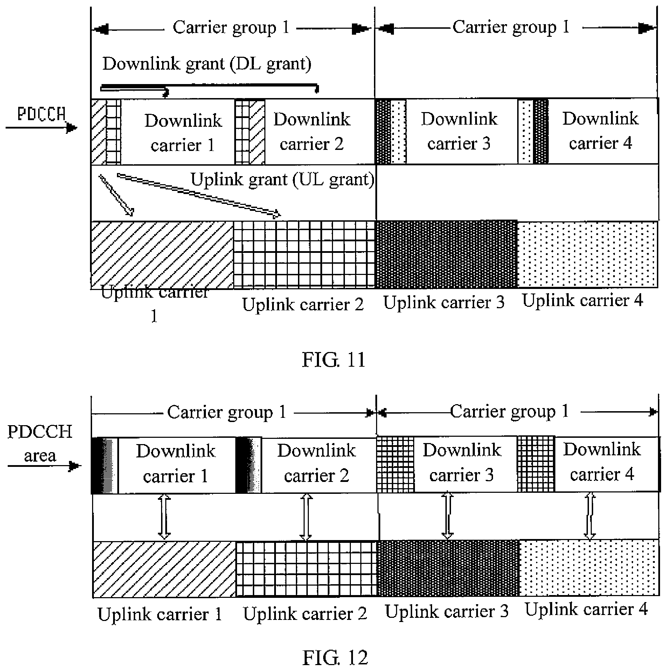

FIG. 11 is a schematic diagram of an application scenario of a method for allocating resources according to a tenth embodiment of the present invention.

In this embodiment, for an application scenario of a multi-carrier FDD system, control channel resources for transmitting scheduling assignment signaling may be allocated on any downlink carrier in a carrier group. The scheduling assignment signaling is used to indicate scheduling assignment information of data transmission on an uplink carrier or a downlink carrier in the carrier group.

In this embodiment, for an application scenario of a multi-carrier TDD system, control channel resources for transmitting scheduling assignment signaling may be allocated on any downlink timeslot in a carrier group.

A technical solution to resource allocation in this embodiment is described in detail by taking the multi-carrier FDD system as an example below. A technical solution to resource allocation in the multi-carrier TDD system is similar and is not described here.

In a data communication process between an eNB and a UE, the eNB first needs to send scheduling assignment signaling of a PDCCH to indicate scheduling assignment information of data transmission on a specifically allocated carrier, for example, to notify the UE of information about whether to receive or transmit data and how to modulate/demodulate and encode/decode the data. The scheduling assignment signaling carried on the PDCCH may include a downlink (DL) grant and an uplink (UL) grant. The DL grant is used to notify the UE of information about on which time/frequency resources of which carrier the data is received. The UL grant is used to notify the UE of information about on which time/frequency resources of which carrier the data is transmitted. The eNB sends the scheduling assignment signaling of the PDCCH to the UE through a control channel of shared time/frequency resources. To determine specific data transmission status on the PDCCH of the UE, the UE needs to perform reception and blind detection in possible transmission areas of the control channel of the shared time/frequency resources. If the scheduling assignment signaling detected by the UE passes an ID check and a CRC check of the UE, it indicates that the scheduling assignment signaling is sent by the eNB to the UE. In this case, the UE may parse the scheduling assignment signaling according to a scheduling assignment signaling format defined by technical specifications and obtain a time/frequency resource position where the data needs to be received or transmitted. Later, the UE may further complete corresponding data reception and transmission according to the scheduling assignment signaling. In this way, data communication between the UE and the eNB is implemented.

The shared time/frequency resources for carrying the scheduling assignment signaling of the PDCCH are necessary control channel overhead for data transmission in the system. If this resource overhead can be reduced, throughput of the system and the UE is increased. Therefore, if possible, the number of bits of the scheduling assignment signaling should be reduced so that fewer time/frequency resources are occupied without deteriorating transmission performance. The scheduling assignment signaling of the PDCCH carried on any carrier in a carrier group is used only to indicate the scheduling assignment information of PUSCH or PDSCH data transmission on uplink and downlink carriers in the carrier group. Therefore, the number of bits occupied by carrier indication information in the scheduling assignment signaling of the PDCCH needs to be sufficient to indicate only an identifier of each carrier in the carrier group rather than identifiers of all carriers in the system. This helps to reduce load overhead of control signaling.

In the application scenario shown in FIG. 11, the PDCCH DL grant carried on downlink carrier 1 in carrier group 1 may be used to indicate the scheduling assignment information of PDSCH data transmission on downlink carriers 1 and 2 in carrier group 1, but the PDCCH DL grant carried on downlink carrier 1 in carrier group 1 may not be used to indicate the scheduling assignment information of PDSCH data transmission on downlink carriers 3 and 4 in carrier group 2; the PDCCH UL grant carried on downlink carrier 1 in carrier group 1 may be used to indicate the scheduling assignment information of PUSCH data transmission on uplink carriers 1 and 2 in carrier group 1, but the PDCCH UL grant transmitted on downlink carrier 1 in carrier group 1 may not be used to indicate the scheduling assignment information of PUSCH data transmission on uplink carriers 3 and 4 in carrier group 2. Likewise, a function of scheduling assignment signaling of the PDCCH carried on another carrier in the carrier group is similar to the function of the scheduling assignment signaling of the PDCCH carried on downlink carrier 1 in carrier group 1, and is used to indicate the scheduling assignment information of PUSCH or PDSCH data transmission on the uplink and downlink carriers only in the carrier group.

In this embodiment, the scheduling assignment signaling of the PDCCH carried on downlink carrier 1 in carrier group 1 requires only one bit to indicate information about a carrier on which the data is transmitted, for example, to indicate that the data is transmitted on downlink carrier 1 or 2, and it is not necessary to use two bits to indicate that the data is transmitted on one of downlink carriers 1, 2, 3, and 4. Therefore, the load overhead of control signaling is reduced, and utilization of system resources is improved.

In this embodiment, after a network allocates resources based on a carrier group, the UE is notified of system resource allocation information, so that a network device (such as the eNB) and the UE can transmit and receive PDCCH physical downlink control information based on the allocated radio resources.

The method for the eNB to transmit PDCCH physical downlink control information by using allocated radio resources may include: The eNB determines any downlink carrier/timeslot in a carrier group, and on this determined downlink carrier/timeslot, carries scheduling assignment signaling (namely, PDCCH physical downlink control information) for scheduling and instructing data transmission on an uplink carrier/timeslot or a downlink carrier/timeslot in the carrier group; after adding identifier information used for indicating scheduled carrier in the PDCCH physical downlink control information, the eNB transmits the PDCCH physical downlink control information on the determined downlink carrier/timeslot.

The method for the UE to receive the PDCCH physical downlink control information by using allocated radio resources may include: The UE performs reception and blind detection on all downlink carriers/timeslots included in a carrier group, obtains the PDCCH physical downlink control information, and obtains the identifier information about the scheduled carrier from the PDCCH physical downlink control information.

In this embodiment, only carriers in a carrier group are scheduled and assigned, and the UE is notified of the system resource allocation information. Further, the methods for transmitting and receiving the PDCCH physical downlink control information are made clear. In this way, the number of carriers to be detected by the UE is reduced, and battery power consumed by the UE is saved. In addition, the number of bits used to indicate identifiers of scheduled carriers is reduced, the load overhead of control signaling is reduced, and therefore the utilization of system resources is improved.

### Embodiment 11

FIG. 12 is a schematic diagram of an application scenario of a method for allocating resources according to an eleventh embodiment of the present invention,

In this embodiment, for an application scenario of a multi-carrier FDD system, the same downlink control channel resources required for transmitting downlink control information are allocated for each downlink carrier in a carrier group within a transmission time unit.

In this embodiment, for an application scenario of a multi-carrier TDD system, the same downlink control channel resources required for transmitting downlink control information are allocated for each downlink timeslot in a carrier group within a transmission time unit.

A technical solution to resource allocation in this embodiment is described in detail by taking the multi-carrier FDD system as an example below. A technical solution to resource allocation in the multi-carrier TDD system is similar and is not described here.

In each transmission time unit, the downlink control information sent by a network to a UE is transmitted by using shared time/frequency resources of the system. Due to a difference in the number of UEs scheduled by the network within each transmission time unit, a difference in a size of time/frequency resources occupied by transmission of specific scheduling assignment signaling, and a difference in PHICH channel resources for transmitting feedback information corresponding to PUSCH transmission, a size of shared time/frequency resources used by the network to transmit downlink control information within each transmission time unit is different. For effective utilization of system resources, a CFI value in a PCFICH may be used to flexibly configure the number of Orthogonal Frequency-Division Multiplexing (OFDM) symbols required for transmitting downlink control information. For example, the CFI value is represented by two bits, used to indicate that one, two, or three OFDM symbols are required for transmitting downlink control information. The downlink control information may include: scheduling assignment signaling of a PDCCH, PHICH feedback information, and PCFICH indication information. The PCFICH indication information is transmitted on a first OFDM symbol.

In this embodiment, the same control channel resources are allocated for each carrier in a carrier group within a transmission time unit. The specific implementation may be: Within a transmission time unit, such as a subframe, PCFICH content transmitted on any downlink carrier in the carrier group is set to be the same, that is, the same CFI value is used. In this way, the number of OFDM symbols required for transmitting downlink control information on each downlink carrier in the carrier group is the same, but the number of OFDM symbols required for transmitting downlink control information on downlink carriers in different carrier groups may be the same or different.

In the application scenario shown in FIG. 12, CFI values of downlink carriers 1 and 2 in carrier group 1 are the same, that is, the number of OFDM symbols required for transmitting downlink control information carried on downlink carriers 1 and 2 in carrier group 1 is the same; CFI values of downlink carriers 3 and 4 in carrier group 2 are the same, that is, the number of OFDM symbols required for transmitting downlink control information carried on downlink carriers 3 and 4 in carrier group 2 is the same; CFI values of downlink carriers in carrier group 1 and carrier group 2 may be the same or different.

In this embodiment, the same control channel resources are allocated for each downlink carrier/timeslot in a carrier group within a transmission time unit, so that the number of OFDM symbols required for transmitting downlink control information on each downlink carrier/timeslot in the carrier group is the same. This helps the UE to perform combination reception and detection on PCFICHs of multiple carriers in the carrier group and therefore improves PCFICH detection performance; moreover, uplink feedback channel resources corresponding to data transmission on multiple carriers in the carrier group can be reserved effectively. Even if too many uplink feedback channel resources are reserved within a transmission time unit, corresponding uplink feedback channel numbers may be first sorted in an order of downlink carriers in the carrier group, and then sorted in an order of symbols occupied by control channels included in each carrier. Because the number of control channel symbols included in each carrier in the carrier group is the same, when the reserved uplink feedback channel resources are redundant, the redundant time/frequency resources may be centralized in this embodiment, so that the system can reuse these redundant resources that are not occupied by an uplink feedback channel, for example, an eNB may assign these resources to another UE through the PDCCH.

On the basis of the foregoing technical solution, if different carrier groups include a same carrier, the CFI value of this carrier may be configured to be the same as the CFI value of another carrier in any of the carrier groups that include the carrier. For example, in the application scenario shown in FIG. 9, downlink carrier 2 belongs to both carrier group 1 and carrier group 2. The CFI value of downlink carrier 2 may be configured to be the same as the CFI value of downlink carrier 1 in carrier group 1, or the same as the CFI value of downlink carrier 3 in carrier group 2. In this application scenario, the network needs to make specific configuration of the CFI value of downlink carrier 2 clear. The specific configuration of the CFI value may be as follows: The CFI value of downlink carrier 2 may be the same as the CFI value of another downlink carrier in carrier group 1, or the same as the CFI value of another downlink carrier in carrier group 2, so that the UE correctly perform combination detection and data reception.

Or, the CFI value of a downlink carrier included in different carrier groups and the CFI value of another downlink carrier included in those carrier groups may be configured to a same value. In the application scenario shown in FIG. 9, the CFI value of downlink carrier 2, the CFI value of downlink carrier 1 in carrier group 1, and the CFI value of downlink carrier 3 in carrier group 2 may be configured to the same value. In this scenario, each downlink carrier included in carrier group 1 and carrier group 2 has the same CFI value, which helps the UE to perform combination reception of PCFICH information on multiple downlink carriers in the carrier group and therefore improves the PCFICH detection performance.

In this embodiment, after the network allocates resources based on a carrier group, the UE is notified of system resource allocation information. After determining the CFI value of each downlink carrier/timeslot in the carrier group, the eNB transmits the CFI value through the PCFICH on each downlink carrier/timeslot in the carrier group.

After obtaining information that the CFI value of each downlink carrier/timeslot in the carrier group is the same or different, the UE performs combination or independent reception and detection on the PCFICH of each carrier/timeslot in the carrier group accordingly.

This embodiment helps the UE to implement combination reception of PCFICH information on multiple downlink carriers/timeslots in the carrier group and therefore improves the PCFICH detection performance.

### Embodiment 12

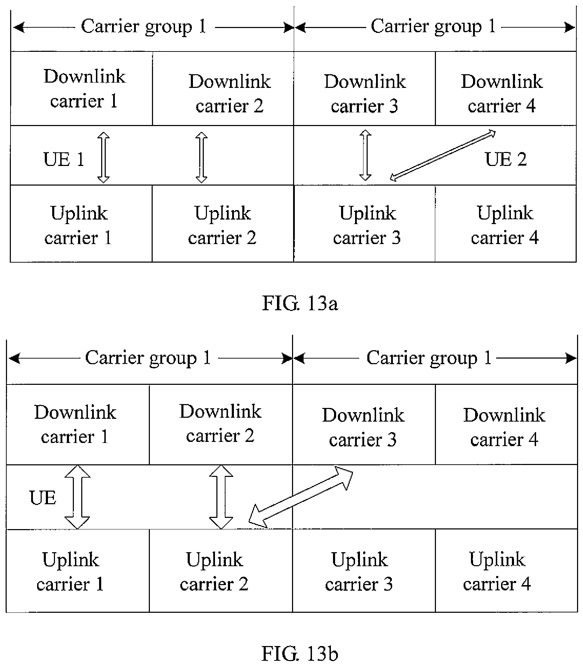

FIG. 13a is a schematic diagram of a first application scenario of a method for allocating resources according to a twelfth embodiment of the present invention. FIG. 13b is a schematic diagram of a second application scenario of a method for allocating resources according to the twelfth embodiment of the present invention. In this embodiment, carrier resources of a carrier group or of different carrier groups are allocated for a UE according to a capability and/or a service requirement of the UE.

For a UE that has a low carrier aggregation capability or requires a low service transmission rate, a system allocates carrier resources within a carrier group for the UE if possible. That is, a network configures the UE to aggregate only carriers in the carrier group. In the application scenario shown in 13a, the system configures the UE to perform UE-specific asymmetric carrier aggregation on multiple carriers in a carrier group. UE 1 supports aggregation of downlink carrier 1 and downlink carrier 2 only in carrier group 1, and supports aggregation of uplink carrier 1 and uplink carrier 2; UE 2 supports aggregation of downlink carrier 3 and downlink carrier 4 only in carrier group 2, and supports transmission only on uplink carrier 3. Because the system has reserved resources in the carrier group, the system allocates carrier resources for the UE in the carrier group, which helps to save overhead of system resources and facilitates the UE to perform effective aggregation.

For a UE that has a high carrier aggregation capability or requires a high service transmission rate, the system may schedule carrier resources of different carrier groups for the UE. That is, the network configures the UE to perform carrier aggregation between carrier groups. In the application scenario shown in FIG. 13b, the system schedules carrier resources of different carrier groups for a UE, that is, the system configures the UE to perform UE-specific asymmetric carrier aggregation on carriers in carrier groups 1 and 2. Within a carrier aggregation capability scope of the UE, the UE supports aggregation of multiple carriers in different carrier groups according to its requirement for a high service transmission rate. For example, the UE supports the aggregation of downlink carriers 1 and 2 in carrier group 1 and downlink carrier 3 in carrier group 2; the UE also supports the aggregation of uplink carriers 1 and 2 in carrier group 1.

In addition, in an application scenario of inter-group scheduling of carrier resources, the UE may concurrently transmit control signaling in each carrier group by using system-reserved resources in two or more carrier groups. Or, the system may dynamically reconfigure system resources required for transmitting control signaling for the UE in inter-group scheduling. For example, if the UE does not support the aggregation of uplink carrier 3, when the UE receives data through downlink carrier 3, control channel resources may be dynamically configured on uplink carrier 2 and used for transmitting feedback information of downlink carrier 3. The dynamically configured control channel resources may be reserved resources on uplink carrier 2, and these reserved resources are used for transmitting feedback information of downlink carrier 3; or the dynamically configured control channel resources may be resources other than the reserved resources allocated on uplink carrier 2, and these non-reserved resources are used for transmitting feedback information of downlink carrier 3. Based on the dynamically configured control channel resources, the UE may select one uplink carrier for transmitting all control signaling information of the same carrier group, or for transmitting all control signaling information of different carrier groups, which helps to enhance flexibility of control signaling transmission and resource configuration.

This embodiment supports flexible system carrier configuration within a carrier group or between different carrier groups, which helps to save the overhead of system resources, facilitates the UE to perform effective aggregation, significantly simplifies implementation of UE-specific carrier aggregation, and helps to enhance the flexibility of control signaling transmission.

In this embodiment, after the network allocates resources based on a carrier group, the UE is notified of system resource allocation information, and methods for an eNB and the UE to transmit data based on a PSDCH are further made clear. That is, the eNB may transmit data after carrying the data on resources scheduled on a PSDCH of each downlink carrier/timeslot in a carrier group; and the UE may transmit data after carrying the data on resources scheduled on a PSDCH of each uplink carrier/timeslot in a carrier group.

In this embodiment, after the network allocates resources based on a carrier group, the UE is notified of the system resource allocation information, and methods for the eNB and UE to receive data based on a PSDCH is further made clear. That is, the eNB may receive and detect data according to scheduling assignment information of data transmitted on a PSDCH of each uplink carrier/timeslot in a carrier group; and the UE may receive and detect data according to scheduling assignment information of data transmitted on a PSDCH of each downlink carrier/timeslot in a carrier group.

### Embodiment 13

An application scenario of a method for allocating resources provided in a thirteenth embodiment is as follows: On one or more carriers in a carrier group, radio resources are allocated for transmitting carrier group information of a system.

In this embodiment, carrier group information of the system may be notified through a broadcast channel of one or more carriers in a carrier group and/or a dedicated channel of a UE. The carrier group information may include one or any combination of the following:
carrier group information, for example, the number of carrier groups in the system and/or an identifier such as a carrier group sequence number (group index) corresponding to each carrier group;
an identifier of the carrier group, such as the grouping index of the carrier group;
information about resource reservation of each control channel in this carrier group, where control channels may include a PUCCH and a PHICH, and the information about reservation may be: maximum resources reserved in a backward-compatible system, or resources reserved in an overlapped manner between carriers, or carriers where resources are not reserved; information about carriers in the carrier group, such as a bandwidth of each carrier, a center frequency, and paired uplink and downlink carriers and bandwidth granularities of their transceiving duplexers; and/or
indication information of another carrier, such as whether there are available carrier resources in another carrier group.

In this embodiment, carrier group information may be sent by using one or more carriers in a carrier group, which helps to improve flexibility and efficiency of sending carrier group information of the system.

### Embodiment 14

An application scenario of a method for allocating resources provided in a fourteenth embodiment is as follows: One or more carriers in a carrier group are configured as main carriers; radio resources for sending carrier group information of a system are allocated on the main carriers; the main carriers pre-configured in the carrier group may broadcast one or more information elements included in carrier group information through broadcast channels; the main carriers mentioned here may include a cell-specific main carrier or a UE-specific main carrier.

If only one carrier in a carrier group is used for broadcasting, a pre-configured cell-specific main carrier may be used or broadcasting, that is, all UEs in the carrier group must receive broadcast messages through the carrier, so that each UE using carrier resources in the carrier group can effectively detect and receive carrier group information. If multiple carriers in the carrier group are used for broadcasting, pre-configured UE-specific main carriers may be selected for broadcasting, that is, different UEs in the carrier group may use main carriers configured by themselves for receiving broadcast messages, and the main carriers corresponding to different UEs may be the same or different, so that each UE using carrier resources in the carrier group can effectively detect and receive carrier information on the main carriers corresponding to the UEs.

To ensure backward compatibility of the system, it is necessary to consider a difference in capabilities of different UEs in a process of selecting a cell-specific main carrier or a UE-specific main carrier. To get compatible with a UE that supports data reception and transmission only through a pair of uplink and downlink carriers that have a mapping relationship and enable the UE to communicate normally, a carrier group should include at least one downlink carrier and a corresponding uplink carrier.

If a network configures one or more carriers in a carrier group as cell-specific main carriers, paired uplink and downlink carriers that have a mapping relationship in the carrier group may be preferably determined as cell-specific main carriers, so that the determined main carriers have all features of a backward-compatible system; for example, the downlink carrier includes control channel resources such as a synchronization channel, a broadcast channel, and a PDCCH and a PHICH of a UE, and the uplink carrier includes control channel resources such as a PUCCH and a Physical Random Access Channel (PRACH). In this way, LTE-A (LTE is short for Long Term Evolution) UEs camping in this carrier group and LTE UEs camping on this pair of uplink and downlink carriers can all perform normal data communication. Similarly, if the network configures one or more carriers in a carrier group as UE-specific main carriers, the paired uplink and downlink carriers that have a mapping relationship in this carrier group may be preferably determined as UE-specific main carriers, so that the determined main carriers have all the features of the backward-compatible system; the UE-specific main carriers are used to broadcast the carrier group information of the system, which helps to balance loads among multiple main carriers.

In this embodiment, after the network allocates resources based on a carrier group, the UE is notified of system resource allocation information. Further, a transmission method and a reception method used on corresponding downlink control channels by an eNB and the UE are made clearer. That is, transmission and reception are implemented after information used for indicating a carrier group of a UE in the carrier group is added in one or more downlink control channels in the carrier group.

In this embodiment, the carrier group information of the system may be transmitted by a main carrier in the carrier group, instead of being transmitted by every carrier in the carrier group. Therefore, overhead of resources occupied by control signaling is reduced, and resource utilization is optimized.

### Embodiment 15

An application scenario of a method for allocating resources provided in a fifteenth embodiment of the present invention is as follows: A system allocates radio resources so that data transmitted by a UE can be handed over between different carriers in a carrier group.

When the UE has a low carrier aggregation capability or requires a low service transmission rate, the system may configure, according to an actual requirement, a handover enabling flag to indicate whether a network supports an inter-carrier handover of data transmitted by the UE in the carrier group, and a handover frequency that should be used in a handover process, and notifies the UE of a configuration result including the handover enabling flag and/or the new frequency for a handover through a Radio Resource Control (RRC) instruction of the UE or through dynamic physic layer signaling. Applications and advantages of this embodiment are reflected in two aspects:
In one aspect, the data transmitted by the UE to the network may be semi-statically or dynamically handed over between different carriers in the carrier group, so that the network can detect and receive the corresponding data and measure quality of a channel carrying the data. Therefore, signaling used by the UE to feed back channel quality in a communication process may be reduced to some extent, and especially, in a TDD system, channel reciprocity may be fully used to reduce signaling overhead required for network measurement and UE channel quality feedback, and therefore resource utilization is improved.

In another aspect, the data transmitted by the network to the UE may be semi-statically or dynamically handed over between different carriers in the carrier group, so that the UE can detect and receive the corresponding data and measure a carrier that carries the data, for example, measures a Channel Quality Indicator (CQI) or performs measurement for a handover and cell selection. Therefore, battery power consumed by the UE in continuously detecting multiple carriers may be reduced to some extent. This advantage is more significant for a UE that transmits and receives data based on multiple RF links. In this embodiment, the RF links of carriers that are not used for transmitting data may be disabled, battery power consumption of the UE is reduced apparently, and a service life of a battery is extended.

In this embodiment, after the network allocates resources based on a carrier group, the UE is notified of system resource allocation information. Further, transmission methods used on corresponding downlink and uplink data channels or control channels by an eNB and a UE are made clear, that is, corresponding data or control information is transmitted after being carried on the data channels or control channels of every uplink carrier/timeslot and every downlink carrier/timeslot in the carrier group.

In this embodiment, after the network allocates resources based on a carrier group, the UE is notified of the system resource allocation information. Further, reception methods used on the corresponding downlink and uplink data channels or control channels by the eNB and the UE are made clear, that is, perform reception and detection according to the corresponding data or control information transmitted on the data channels or control channels of every uplink carrier/timeslot and every downlink carrier/timeslot in the carrier group.

In this embodiment, after the network allocates resources based on a carrier group, the UE is notified of the system resource allocation information. Further, a transmission method and a reception method used on the data channels or control channels by the eNB or the UE are made clear. A beneficial effect is obtained on the measurement and/or the signaling overhead required for feeding back channel quality by the UE, and helps to improve the resource utilization.

### Embodiment 16

An application scenario of a method for allocating resources provided in a sixteenth embodiment of the present invention is as follows: In a TDD system, when uplink/downlink timeslot ratios of different carrier groups are different, a system allocates radio resources to hand over a UE from a current carrier group to another carrier group.

In the TDD system, assuming that the uplink/downlink timeslot ratios of different carrier groups are different, when the UE has a new requirement for service delay, the system may hand over the UE to another carrier group to meet the new requirement of the UE for service delay. Or, the TDD system may change scheduling and indication of a HARQ process between different carrier groups. For example, in a HARQ process of data, the UE may currently transmit a packet on an uplink timeslot of carrier 1 in carrier group 1, but an uplink timeslot of carrier 3 in carrier group 2 comes earlier than the uplink timeslot of carrier 1; in this case, the system may allocate radio resources to hand over the UE from carrier group 1 to carrier group 2, and enable the UE to transmit the packet on the uplink timeslot of carrier 3 in carrier group 2, so that the data and corresponding ACK/NACK feedback information can be transmitted faster.

In this embodiment, the TDD system supports an inter-carrier handover or HARQ transmission between carrier groups with different uplink/downlink timeslot ratios. This may satisfy varied requirements of a UE for service delay or reduce transmission delay of data and corresponding feedback information, improve utilization of system resources, and improve throughput of the system and the UE.

In this embodiment, after a network allocates resources based on a carrier group, the UE is notified of system resource allocation information. Further, transmission methods used on corresponding downlink and uplink data channels or control channels by an eNB and the UE are made clear, that is, corresponding data or control information is transmitted after being carried on the data channels or control channels of every uplink carrier/timeslot and every downlink carrier/timeslot in the carrier group.

In this embodiment, after the network allocates resources based on a carrier group, the UE is notified of the system resource allocation information. Further, reception methods used on the corresponding uplink and downlink data channels or control channels by the eNB and the UE are made clear, that is, perform reception and detection according to the corresponding data or control information transmitted on the data channels or control channels of every uplink carrier/timeslot and every downlink carrier/timeslot in the carrier group.

In this embodiment, after the network allocates resources based on a carrier group, the UE is notified of the system resource allocation information. Further, a transmission method and a reception method used on the data channel or control channels by the eNB and the UE are made clear.

Those skilled in the art may understand that the methods for allocating resources based on a carrier group according to the foregoing embodiments may be used separately, or two or more of the foregoing solutions may be combined for use. No further description is provided.

The technical solution of the embodiment of the present invention can be used to group multiple carriers to obtain multiple carrier groups, and after system resources are allocated based on the carrier groups, the embodiment of the present invention further includes sending the system resource allocation information to the UE, so that the UE and a network device such as the eNB can communicate by using system resources corresponding to the allocation information.

After the carriers in the system are grouped and resources are allocated based on the carrier groups, a possible process for the NE to access the network and determine an initial default carrier group of the UE is as follows:
Upon power-on, an LTE-A UE starts to search the network. When the UE finds a synchronization signal on a downlink carrier and this signal meets a performance requirement of the UE, the UE may camp on this downlink carrier and start to receive broadcast information. According to the received broadcast information, the UE may obtain carrier group information and PRACH resources on an uplink carrier corresponding to this downlink carrier. Afterward, the UE uses the PRACH resources to send Random Access Channel (RACH) information to initiate an uplink synchronization procedure. After the UE and the eNB complete uplink and downlink synchronization and the UE obtains necessary system information, the UE and the eNB may use this pair of uplink and downlink carriers for data communication.

In a network access process of the UE, the UE may determine its initial default carrier group according to the carrier group information. In addition, the system may instruct the UE, according to an actual network load, channel quality information of the UE, a service requirement of the UE, or a carrier aggregation capability of the UE, to perform a handover between carrier groups when necessary. The system supports a semi-static handover between carrier groups. Correspondingly, the UE performs a handover between carrier groups according to information about the handover between carrier groups sent by the system. A process of the handover between carrier groups may include processes in which the UE re-searches for another carrier group and sets up a connection with the found carrier group so that the UE and eNB can communicate based on the carrier group after the handover.

### Embodiment 17

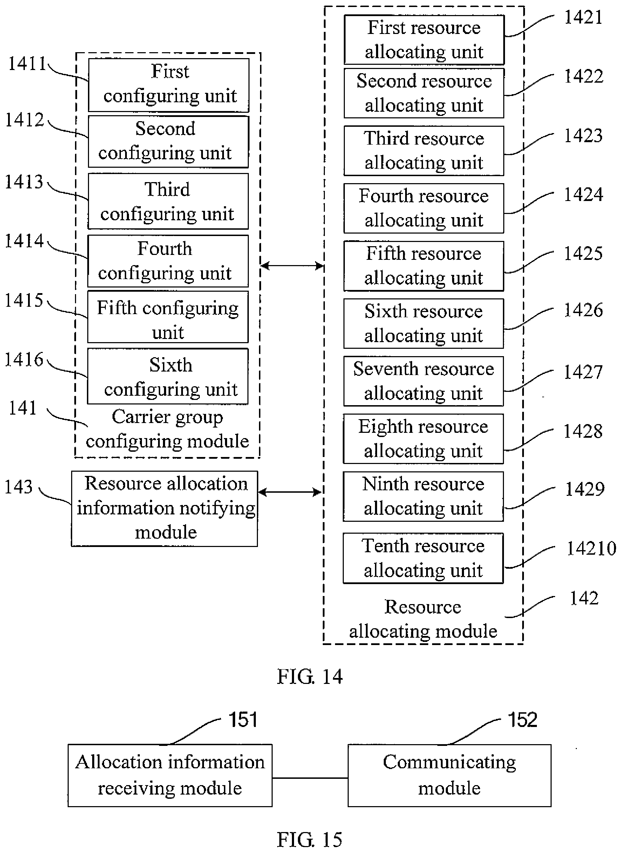

FIG. 14 is a schematic structural diagram of an eNB according to a seventeenth embodiment of the present invention. As shown in FIG. 14, the eNB in this embodiment includes a carrier group configuring module 141 and a resource allocating module 142.

The carrier group configuring module 141 is configured to group multiple carriers according to a preset condition to obtain at least one carrier group.

The resource allocating module 142 is configured to allocate system resources based on the carrier group obtained by the carrier group configuring module 141.

On the basis of the foregoing technical solution, the eNB may also include a resource allocation information notifying module 143.

The resource allocation information notifying module 143 is configured to notify a UE of corresponding system resource allocation information after the resource allocating module 142 allocates system resources based on the carrier group, so that the system resources corresponding to the allocation information are used for communication with the UE.

In the foregoing technical solution, the carrier group configuring module 141 may further include one or more of the following units: a first configuring unit 1411, a seconding configuring unit 1412, a third configuring unit 1413, a fourth configuring unit 1414, a fifth configuring unit 1415, and a sixth configuring unit 1416.

The first configuring unit 1411 is configured to configure continuous carriers to one carrier group. The second configuring unit 1412 is configured to configure discrete carriers that belong to the same band to one carrier group. The second configuring unit 1412 is further configured to configure multiple discrete carriers that belong to different bands to multiple different carrier groups according to an actual requirement. A specific principle of implementation is disclosed in the second embodiment of the present invention and FIG. 3, and not further described.

The third configuring unit 1413 is configured to configure an uplink carrier and a downlink carrier bound with the uplink carrier to one carrier group. A specific principle of implementation is disclosed in the third embodiment of the present invention, FIG. 4a, and FIG. 4b, and not further described.

The fourth configuring unit 1414 is configured to group carriers according to a capability and/or a service requirement of a UE. A specific principle of implementation is disclosed in the fourth embodiment of the present invention and FIG. 5, and not further described.

The fifth configuring unit 1415 is configured to configure carriers that have same cell coverage to one carrier group. A specific principle of implementation is disclosed in the fifth embodiment of the present invention and FIG. 6, and not further described.

The sixth configuring unit 1416 is configured to configure carriers that have a same uplink/downlink timeslot ratio to one carrier group. A specific principle of implementation is disclosed in the sixth embodiment of the present invention and FIG. 7, and not further described.

After carriers are grouped by the foregoing configuring units, carriers included in different carrier groups are different or partly the same. A specific principle of implementation is disclosed in the eighth embodiment of the present invention and FIG. 9, and not further described.

Functions of two or more of the units included in the carrier group configuring module 141 may be superimposed (not shown in FIG. 14) to group multiple carriers. For example, the functions of the first configuring unit 1411 and the third configuring unit 1413 are superimposed to implement grouping of multiple carriers. A specific principle of implementation is disclosed in the seventh embodiment of the present invention and FIG. 8, and not further described.

In the foregoing technical solution, the resource allocating module 142 may further include one or more of the following units: a first resource allocating unit 1421, a second resource allocating unit 1422, a third resource allocating unit 1423, a fourth resource allocating unit 1424, a fifth resource allocating unit 1425, a sixth resource allocating unit 1426, a seventh resource allocating unit 1427, an eighth resource allocating unit 1428, a ninth resource allocating unit 1429, and a tenth resource allocating unit 14210.

The first resource allocating unit 1421 is configured to reserve, on an uplink carrier/timeslot in a carrier group, PUCCH resources for a downlink carrier/timeslot in the carrier group, for transmitting uplink control information. The second resource allocating unit 1422 is configured to reserve, on a downlink carrier/timeslot in a carrier group, PHICH resources for an uplink carrier/timeslot in the carrier group, for transmitting downlink control information. A specific principle of implementation of system resource allocation is disclosed in the ninth embodiment of the present invention, FIG. 10a, and FIG. 10b, and not further described.

The third resource allocating unit 1423 is configured to allocate, on one or more downlink carriers in a carrier group, radio resources for transmitting scheduling assignment signaling, where the scheduling assignment signaling is used to indicate scheduling assignment information of data transmission on an uplink carrier and/or a downlink carrier in the carrier group.

The fourth resource allocating unit 1424 is configured to allocate, on one or more downlink timeslots in a carrier group, radio resources for transmitting scheduling assignment signaling, where the scheduling assignment signaling is used to indicate scheduling assignment information of data transmission on an uplink timeslot and/or a downlink timeslot in the carrier group. A specific principle of implementation of system resource allocation is disclosed in the tenth embodiment of the present invention and FIG. 11, and not further described.

The fifth resource allocating unit 1425 is configured to allocate, within a transmission time unit, same resources required for transmitting downlink control information, for each downlink carrier/timeslot in a carrier group. A specific principle of implementation of system resource allocation is disclosed in the eleventh embodiment of the present invention and FIG. 12, and not further described.

The sixth resource allocating unit 1426 is configured to allocate, according to a capability and/or a service requirement of a UE, carrier resources of a carrier group or of different carrier groups for the UE. A specific principle of implementation of system resource allocation is disclosed in the twelfth embodiment of the present invention, FIG. 13a, and FIG. 13b, and not further described.

The seventh resource allocating unit 1427 is configured to allocate, on one or more carriers in a carrier group, radio resources for sending carrier group information. A specific principle of implementation of system resource allocation is disclosed in the thirteenth embodiment of the present invention and not further described.

The eighth resource allocating unit 1428 is configured to configure one or more carriers in a carrier group as main carriers and allocate, on the main carriers, radio resources for sending carrier group information of a system. A specific principle of implementation of system resource allocation is disclosed in the fourteenth embodiment of the present invention and not further described.

The ninth resource allocating unit 1429 is configured to allocate system resources so that data transmitted by the UE can be handed over between different carriers in a carrier group. A specific principle of implementation of system resource allocation is disclosed in the fifteenth embodiment of the present invention and not further described.

The tenth resource allocating unit 14210 is configured to allocate system resources when the uplink/downlink timeslot ratios of different carrier groups are different, so that the UE can be handed over from a current carrier group to another carrier group. A specific principle of implementation of system resource allocation is disclosed in the sixteenth embodiment of the present invention and not further described.

The eNB provided in this embodiment may configure a set of multiple carriers compliant with a particular relationship to a carrier group according to a preset condition, and allocate system resources based on the carrier group. This helps to reduce extra consumption of system resources and improve utilization of system resources.

### Embodiment 18

FIG. 15 is a schematic structural diagram of a UE according to an eighteenth embodiment of the present invention. As shown in FIG. 15, the UE in this embodiment includes an allocation information receiving module 151 and a communicating module 152.

The allocation information receiving module 151 is configured to receive system resource allocation information, where the allocation information is obtained by a network such as an eNB by allocating system resources based on configured multiple carrier groups.

The communicating module 152 is configured to use the system resources corresponding to the allocation information received by the allocation information receiving module 151 for communication with the network device such as the eNB.

The UE provided in this embodiment may use corresponding system resources, which are allocated by a network based on carrier groups, to communicate with the network. This helps to reduce extra consumption of system resources and improve utilization of system resources.

Those skilled in the art may understand that the accompanying drawings illustrate only exemplary embodiments of the present invention and that the modules or procedures in the accompanying drawings are optional in the invention.

Those skilled in the art may understand that the modules of the apparatuses in the embodiments of the present invention may be disposed in the apparatuses as described in the embodiments of the present invention or disposed in one or more apparatuses other than the apparatuses in the embodiments of the present invention. The modules in the embodiments may be combined into one module or further decomposed to several submodules.

Sequence numbers of the embodiments are provided only for ease of description and do not represent an order of preference.

Those skilled in the art may understand that all or part of the steps in the methods of the embodiments of the present invention can be implemented by hardware under the instruction of a program. The program may be stored in a computer readable storage medium and when the program is executed, the steps in the methods of the embodiments of the present invention are executed. The storage medium may be any medium that can store a program code, such as a Read Only Memory (ROM), a Random Access Memory (RAM), a magnetic disk, or a Compact Disk-Read Only Memory (CD-ROM).

The invention is solely defined by the appended claims.

## Claims

1. A method for allocating resources, comprising:
defining (21) multiple carriers as at least one carrier group according to a preset condition, wherein the preset condition comprises at least one of the followings: defining carriers that have same cell coverage as one carrier group; and defining multiple carriers that have a same uplink/downlink timeslot ratio as one carrier group; and
allocating (22) system resources for an obtained carrier group;
notifying a user equipment, UE, of system resource allocation information, so that the system resources corresponding to the allocation information are used for communication with the UE;
wherein the defining multiple carriers as the at least one carrier group according to the preset condition comprises:
performing, according to the preset condition, definition for an uplink carrier and a downlink carrier corresponding to the uplink carrier to obtain the at least one carrier group, wherein each carrier group comprises at least one uplink carrier and a downlink carrier corresponding to the uplink carrier; or
grouping, according to the preset condition, the uplink carriers to obtain at least one uplink carrier subgroup; grouping, according to the preset condition, the downlink carriers to obtain at least one downlink carrier subgroup; and establishing a mapping relationship between the uplink carrier subgroup and the downlink carrier subgroup to obtain the at least one carrier group, wherein each carrier group comprises at least one uplink carrier subgroup and at least one downlink carrier subgroup, and the mapping relationship between the uplink carrier subgroup and the downlink carrier subgroup is an original setting in a system or is dynamically allocated in a system application.

2. The method for allocating resources according to claim 1, wherein the preset condition further comprises at least one of the followings:
defining continuous carriers as one carrier group;
defining an uplink carrier and a downlink carrier corresponding to the uplink carrier as one carrier group;
grouping carriers according to a capability and/or a service requirement of the UE; and
defining discrete carriers that belong to a same band as one carrier group.

3. The method for allocating resources according to claim 1 or 2, wherein the allocating the system resources for the obtained carrier group comprises one or any combination of the following:
reserving, on an uplink carrier/timeslot in a carrier group, Physical Uplink Control Channel, PUCCH, resources for a downlink carrier/timeslot in the carrier group, for transmitting uplink control information;
reserving, on a downlink carrier/timeslot in a carrier group, Physical Hybrid ARQ Indicator Channel, PHICH resources for an uplink carrier/timeslot in the carrier group, for transmitting downlink control information;
allocating, on one or more downlink carriers in a carrier group, radio resources for transmitting scheduling assignment signaling, wherein the scheduling assignment signaling is used to indicate scheduling assignment information of data transmission on an uplink carrier and/or a downlink carrier in the carrier group;
allocating, on one or more downlink timeslots in a carrier group, radio resources for transmitting scheduling assignment signaling, wherein the scheduling assignment signaling is used to indicate scheduling assignment information of data transmission on an uplink timeslot and/or a downlink timeslot in the carrier group;
allocating, within a transmission time unit, same resources required for transmitting downlink control information, for each downlink carrier/timeslot in a carrier group;
on one or more carriers in a carrier group, allocating radio resources for sending carrier group information;
defining one or more carriers in a carrier group as main carriers and allocating, on the main carriers, radio resources for sending carrier group information of a system;
allocating carrier resources of a carrier group or of different carrier groups for the UE according to a capability and/or a service requirement of the UE;
allocating system resources so that data transmitted by the UE is handed over between different carriers in a carrier group; and
allocating system resources when uplink/downlink timeslot ratios of different carrier groups are different, so that the UE is handed over from a current carrier group to another carrier group.

4. The method for allocating resources according to claim 3, wherein, the allocating, the same resources required for transmitting the downlink control information, for the each downlink carrier/timeslot in the carrier group, comprises:
configuring a same Control Format Indicator, CFI, value for a Physical Control Format Indicator Channel, PCFICH on each downlink carrier in a carrier group, so that the number of Orthogonal Frequency-Division Multiplexing, OFDM symbols required for transmitting downlink control information on each downlink carrier/timeslot in the carrier group is the same.

5. The method for allocating resources according to claim 4, wherein, when carriers comprised in different carrier groups are partly the same and a same carrier is a downlink carrier, a CFI value of the same downlink carrier is configured to be the same as a CFI value of another downlink carrier in any carrier group; or, a CFI value of each downlink carrier comprised in each carrier group is configured to a same value.

6. The method for allocating resources according to claim 3, 4 or 5, wherein the allocating the carrier resources of the different carrier groups for the UE comprises:
scheduling system resources reserved on each carrier comprised in different carrier groups, for transmitting UE data; or
reallocating carrier resources of different carrier groups, for transmitting UE data.

7. The method for allocating resources according to claim 3, 4, 5 or 6, wherein the system resource allocation information comprises: a flag of enabling a handover of data transmitted by the UE between different carriers in a carrier group and a new frequency for the handover.

8. The method for allocating resources according to claim 7, wherein the allocating system resources so that the UE is handed over from a current carrier group to another carrier group comprises:
allocating, according to a service requirement of the UE, the system resources so that the UE is handed over from the current carrier group to another carrier group; or
allocating, in a Hybrid Automatic Retransmission Request, HARQ, process of data related to the UE, the system resources so that transmission of data related to the UE is handed over from the current carrier group to another carrier group.

9. An evolved NodeB, eNB, comprising:
a carrier group defining module (141), configured to define multiple carriers as at least one carrier group according to a preset condition, wherein the preset condition comprises at least one of the followings: defining carriers that have same cell coverage as one carrier group; and defining multiple carriers that have a same uplink/downlink timeslot ratio as one carrier group; and
a resource allocating module (142), configured to allocate system resources for an obtained carrier group;
a resource allocation information notifying module (143), configured to notify a User Equipment, UE, of corresponding system resource allocation information, so that the system resources corresponding to the allocation information are used for communication with the UE;
wherein the carrier group defining module (141) is configured to the defining multiple carriers as the at least one carrier group according to the preset condition comprises:
the carrier group defining module (141) is configured to perform, according to the preset condition, definition for an uplink carrier and a downlink carrier corresponding to the uplink carrier to obtain the at least one carrier group, wherein each carrier group comprises at least one uplink carrier and a downlink carrier corresponding to the uplink carrier; or
the carrier group defining module (141) is configured to group, according to the preset condition, the uplink carriers to obtain at least one uplink carrier subgroup; group, according to the preset condition, the downlink carriers to obtain at least one downlink carrier subgroup; and establish a mapping relationship between the uplink carrier subgroup and the downlink carrier subgroup to obtain the at least one carrier group, wherein each carrier group comprises at least one uplink carrier subgroup and at least one downlink carrier subgroup, and the mapping relationship between the uplink carrier subgroup and the downlink carrier subgroup is an original setting in a system or is dynamically allocated in a system application.

10. The eNB according to claim 9, wherein the carrier group defining module comprises at least one of the following units:
a first configuring unit (1411), configured to define continuous carriers as one carrier group;
a second defining unit (1412), configured to define discrete carriers that belong as a same band to one carrier group;
a third defining unit (1413), configured to define an uplink carrier and a downlink carrier corresponding to the uplink carrier as one carrier group;
a fourth defining unit (1414), configured to group carriers according to a capability and/or a service requirement of a User Equipment, UE,;
a fifth defining unit (1415), configured to define carriers that have same cell coverage as one carrier group;
a sixth defining unit (1416), configured to define carriers that have a same uplink/downlink timeslot ratio as one carrier group.

11. The eNB according to claim 9 or 10, wherein the resource allocating module comprises at least one of the following units:
a first resource allocating unit (1421), configured to reserve, on an uplink carrier/timeslot in a carrier group, Physical Uplink Control Channel, PUCCH, resources for a downlink carrier/timeslot in the carrier group, for transmitting uplink control information;
a second resource allocating unit (1422), configured to reserve, on a downlink carrier/timeslot in a carrier group, Physical Hybrid ARQ Indicator Channel, PHICH, resources for an uplink carrier/timeslot in the carrier group, for transmitting downlink control information;
a third resource allocating unit (1423), configured to allocate, on one or more downlink carriers in a carrier group, radio resources for transmitting scheduling assignment signaling, wherein the scheduling assignment signaling is used to indicate scheduling assignment information of data transmission on an uplink carrier and/or a downlink carrier in the carrier group;
a fourth resource allocating unit (1424), configured to allocate, on one or more downlink timeslots in a carrier group, radio resources for transmitting scheduling assignment signaling, wherein the scheduling assignment signaling is used to indicate scheduling assignment information of data transmission on an uplink timeslot and/or a downlink timeslot in the carrier group;
a fifth resource allocating unit (1425), configured to allocate, within a transmission time unit, same resources required for transmitting downlink control information, for each downlink carrier/timeslot in a carrier group;
a sixth resource allocating unit (1426), configured to allocate, according to a capability and/or a service requirement of a UE, carrier resources of a carrier group or of different carrier groups for the UE;
a seventh resource allocating unit (1427), configured to allocate, on one or more carriers in a carrier group, radio resources for sending carrier group information;
an eighth resource allocating unit (1428), configured to define one or more carriers in a carrier group as main carriers and allocate, on the main carriers, radio resources for sending carrier group information of a system;
a ninth resource allocating unit (1429), configured to allocate system resources so that data transmitted by the UE is handed over between different carriers in a carrier group; and
a tenth resource allocating unit (14210), configured to allocate system resources when uplink/downlink timeslot ratios of different carrier groups are different, so that the UE is handed over from a current carrier group to another carrier group.

12. A User Equipment, UE, comprising:
an allocation information receiving module (151), configured to receive system resource allocation information, wherein the allocation information is obtained by a network by allocating system resources for defined multiple carrier groups; and
a communicating module (152), configured to use the system resources corresponding to the allocation information to communicate with the network;
wherein, multiple carriers are defined as at least one carrier group according to a preset condition, wherein the preset condition comprises at least one of the followings: defining carriers that have same cell coverage as one carrier group; and defining multiple carriers that have a same uplink/downlink timeslot ratio as one carrier group, and a procedure of defining the multiple carriers as the at least one carrier group according to the preset condition comprises:
performing, according to the preset condition, definition for an uplink carrier and a downlink carrier corresponding to the uplink carrier to obtain the at least one carrier group, wherein each carrier group comprises at least one uplink carrier and a downlink carrier corresponding to the uplink carrier; or
grouping, according to the preset condition, the uplink carriers to obtain at least one uplink carrier subgroup; grouping, according to the preset condition, the downlink carriers to obtain at least one downlink carrier subgroup; and establishing a mapping relationship between the uplink carrier subgroup and the downlink carrier subgroup to obtain the at least one carrier group, wherein each carrier group comprises at least one uplink carrier subgroup and at least one downlink carrier subgroup, and the mapping relationship between the uplink carrier subgroup and the downlink carrier subgroup is an original setting in a system or is dynamically allocated in a system application.

## Patentansprüche

1. Verfahren zum Zuteilen von Ressourcen, das Folgendes umfasst:
Definieren (21) von mehreren Trägern gemäß einer voreingestellten Bedingung als mindestens eine Trägergruppe, wobei die voreingestellte Bedingung mindestens eines von Folgendem umfasst: Definieren von Trägern, die eine selbe Zellabdeckung aufweisen, als eine Trägergruppe und Definieren von mehreren Trägern, die ein selbes Aufwärts-/Abwärtszeitschlitzverhältnis aufweisen, als eine Trägergruppe und Zuteilen (22) von Systemressourcen für eine erhaltene Trägergruppe;
Benachrichtigen einer Teilnehmereinrichtung, UE, über Systemressourcenzuteilungsinformationen, derart, dass die Systemressourcen, die den Zuteilungsinformationen entsprechen, für eine Kommunikation mit der UE verwendet werden;
wobei das Definieren von mehreren Trägern als die mindestens eine Trägergruppe gemäß der voreingestellten Bedingung Folgendes umfasst:
Durchführen einer Definition für einen Aufwärtsträger und einen Abwärtsträger, der dem Aufwärtsträger entspricht, gemäß der voreingestellten Bedingung, um die mindestens eine Trägergruppe zu erhalten, wobei jede Trägergruppe mindestens einen Aufwärtsträger und einen Abwärtsträger, der dem Aufwärtsträger entspricht, umfasst; oder
Gruppieren der Aufwärtsträger gemäß der voreingestellten Bedingung, um mindestens eine Aufwärtsträgeruntergruppe zu erhalten; Gruppieren der Abwärtsträger gemäß der voreingestellten Bedingung, um mindestens eine Abwärtsträgeruntergruppe zu erhalten; und Herstellen einer Zuordnungsbeziehung zwischen der Aufwärtsträgeruntergruppe und der Abwärtsträgeruntergruppe, um mindestens eine Trägergruppe zu erhalten, wobei jede Trägergruppe mindestens eine Aufwärtsträgeruntergruppe und mindestens eine Abwärtsträgeruntergruppe umfasst und die Zuordnungsbeziehung zwischen der Aufwärtsträgeruntergruppe und der Abwärtsträgeruntergruppe eine Originaleinstellung in einem System ist oder in einer Systemanwendung dynamisch zugeteilt wird.

2. Verfahren zum Zuteilen von Ressourcen nach Anspruch 1, wobei die voreingestellte Bedingung ferner mindestens eines von Folgendem umfasst:
Definieren von kontinuierlichen Trägern als eine Trägergruppe;
Definieren eines Aufwärtsträgers und eines Abwärtsträgers, der dem Aufwärtsträger entspricht, als eine Trägergruppe;
Gruppieren von Trägern gemäß einer Fähigkeit und/oder einer Dienstanforderung der UE; und
Definieren von diskreten Trägern, die zu einem selben Band gehören, als eine Trägergruppe.

3. Verfahren zum Zuteilen von Ressourcen nach Anspruch 1 oder 2, wobei das Zuteilen der Systemressourcen für die erhaltene Trägergruppe eines oder eine beliebige Kombination von Folgendem umfasst:
Reservieren von physischen Aufwärtssteuerkanal(PUCCH)-Ressourcen auf einem Aufwärtsträger/-zeitschlitz in einer Trägergruppe für einen Abwärtsträger/-zeitschlitz in der Trägergruppe zum Übertragen von Aufwärtssteuerinformationen;
Reservieren von physischen Hybrid-ARQ-Indikatorkanal(PHICH)-Ressourcen auf einem Abwärtsträger/-zeitschlitz in einer Trägergruppe für einen Aufwärtsträger/- zeitschlitz in der Trägergruppe zum Übertragen von Abwärtssteuerinformationen;
Zuteilen von Funkressourcen zum Übertragen einer Planungszuweisungssignalisierung auf einem oder mehreren Abwärtsträgem in einer Trägergruppe, wobei die Planungszuweisungssignalisierung verwendet wird, um Planungszuweisungsinformationen einer Datenübertragung auf einem Aufwärtsträger und/oder einem Abwärtsträger in der Trägergruppe anzuzeigen;
Zuteilen von Funkressourcen zum Übertragen einer Planungszuweisungssignalisierung in einem oder mehreren Abwärtszeitschlitzen in einer Trägergruppe, wobei die Planungszuweisungssignalisierung verwendet wird, um Planungszuweisungsinformationen einer Datenübertragung in einem Aufwärtszeitschlitz und/oder einem Abwärtszeitschlitz in der Trägergruppe anzuzeigen;
Zuteilen selber Ressourcen, die zum Übertragen von Abwärtssteuerinformationen erforderlich sind, für jeden Abwärtsträger/-zeitschlitz in einer Trägergruppe innerhalb einer Übertragungszeiteinheit;
Zuteilen von Funkressourcen zum Senden von Trägergruppeninformationen auf einem oder mehreren Trägern in einer Trägergruppe;
Definieren von einem oder mehreren Trägern in einer Trägergruppe als Hauptträger und Zuteilen von Funkressourcen zum Senden von Trägergruppeninformationen eines Systems auf den Hauptträgern;
Zuteilen von Trägerressourcen einer Trägergruppe oder von verschiedenen Trägergruppen für die UE gemäß einer Fähigkeit und/oder einer Dienstanforderung der UE;
Zuteilen von Systemressourcen, derart, dass Daten, die von der UE übertragen werden, zwischen verschiedenen Trägern in einer Trägergruppe übergeben werden; und
Zuteilen von Systemressourcen, wenn sich Aufwärts-/Abwärtszeitschlitzverhältnisse von verschiedenen Trägergruppen unterscheiden, derart, dass die UE von einer aktuellen Trägergruppe an eine andere Trägergruppe übergeben wird.

4. Verfahren zum Zuteilen von Ressourcen nach Anspruch 3, wobei das Zuteilen derselben Ressourcen, die zum Übertragen der Abwärtssteuerinformationen erforderlich sind, für jeden Abwärtsträger/-zeitschlitz in der Trägergruppe Folgendes umfasst:
Auslegen eines selben Steuerformatindikator(CFI)-Wertes für einen physischen Steuerformatindikatorkanal, PCFICH, auf jeden Abwärtsträger in einer Trägergruppe, derart, dass die Anzahl von "Orthogonal Frequency-Division Multiplexing"(OFDM)-Symbolen, die zum Übertragen von Abwärtssteuerinformationen auf jedem Abwärtsträger/-zeitschlitz in der Trägergruppe erforderlich sind, dieselbe ist.

5. Verfahren zum Zuteilen von Ressourcen nach Anspruch 4, wobei, wenn Träger, die in verschiedenen Trägergruppen umfasst sind, teilweise dieselben sind und ein selber Träger ein Abwärtsträger ist, ein CFI-Wert desselben Abwärtsträgers derart ausgelegt wird, dass er derselbe ist wie ein CFI-Wert eines anderen Abwärtsträgers in einer beliebigen Trägergruppe; oder ein CFI-Wert jedes Abwärtsträgers, der in jeder Trägergruppe umfasst ist, auf einen selben Wert ausgelegt wird.

6. Verfahren zum Zuteilen von Ressourcen nach Anspruch 3, 4 oder 5, wobei das Zuteilen der Trägerressourcen der verschiedenen Trägergruppen für die UE Folgendes umfasst:
Planen von Systemressourcen, die auf jedem Träger, der in verschiedenen Trägergruppen umfasst ist, reserviert sind, zum Übertragen von UE-Daten; oder
Neuzuteilen von Trägerressourcen von verschiedenen Trägergruppen zum Übertragen von UE-Daten.

7. Verfahren zum Zuteilen von Ressourcen nach Anspruch 3, 4, 5 oder 6, wobei die Systemressourcenzuteilungsinformationen Folgendes umfassen: einen Marker zum Aktivieren einer Übergabe von Daten, die von der UE zwischen verschiedenen Trägern in einer Trägergruppe übertragen werden, sowie eine neue Frequenz für die Übergabe.

8. Verfahren zum Zuteilen von Ressourcen nach Anspruch 7, wobei das Zuteilen von Systemressourcen derart, dass die UE von einer aktuellen Trägergruppe an eine andere Trägergruppe übergeben wird, Folgendes umfasst:
Zuteilen der Systemressourcen gemäß einer Dienstanforderung der UE, derart, dass die UE von der aktuellen Trägergruppe an eine andere Trägergruppe übergeben wird; oder
Zuteilen der Systemressourcen in einem hybriden automatischen Neuübertragungsanforderungs(HARQ)-Prozess von Daten, die die UE betreffen, derart, dass eine Übertragung von Daten, die die UE betreffen, von der aktuellen Trägergruppe an eine andere Trägergruppe übergeben wird.

9. Entwickelter Knoten, eNB, der Folgendes umfasst:
ein Trägergruppendefinitionsmodul (141), das dazu ausgelegt ist, mehrere Träger gemäß einer voreingestellten Bedingung als mindestens eine Trägergruppe zu definieren, wobei die voreingestellte Bedingung mindestens eines von Folgendem umfasst: Definieren von Trägern, die eine selbe Zellabdeckung aufweisen, als eine Trägergruppe und Definieren von mehreren Trägern, die ein selbes Aufwärts-/Abwärtszeitschlitzverhältnis aufweisen, als eine Trägergruppe und
ein Ressourcenzuteilungsmodul (142), das dazu ausgelegt ist, Systemressourcen für eine erhaltene Trägergruppe zuzuteilen;
ein Ressourcenzuteilungsinformationsbenachrichtigungsmodul (143), das dazu ausgelegt ist, eine Teilnehmereinrichtung, UE, über entsprechende Systemressourcenzuteilungsinformationen zu benachrichtigen, derart, dass die Systemressourcen, die den Zuteilungsinformationen entsprechen, für eine Kommunikation mit der UE verwendet werden;
wobei das Trägergruppendefinitionsmodul (141) dazu ausgelegt ist, das Definieren von mehreren Trägern als die mindestens eine Trägergruppe gemäß der voreingestellten Bedingung Folgendes umfasst:
das Trägergruppendefinitionsmodul (141) dazu ausgelegt ist, eine Definition für einen Aufwärtsträger und einen Abwärtsträger, der dem Aufwärtsträger entspricht, gemäß der voreingestellten Bedingung durchzuführen, um die mindestens eine Trägergruppe zu erhalten, wobei jede Trägergruppe mindestens einen Aufwärtsträger und einen Abwärtsträger, der dem Aufwärtsträger entspricht, umfasst; oder
das Trägergruppendefinitionsmodul (141) dazu ausgelegt ist, die Aufwärtsträger gemäß der voreingestellten Bedingung zu gruppieren, um mindestens eine Aufwärtsträgeruntergruppe zu erhalten; den Abwärtsträger gemäß der voreingestellten Bedingung zu gruppieren, um mindestens eine Abwärtsträgeruntergruppe zu erhalten; und eine Zuordnungsbeziehung zwischen der Aufwärtsträgeruntergruppe und der Abwärtsträgeruntergruppe herzustellen, um mindestens eine Trägergruppe zu erhalten, wobei jede Trägergruppe mindestens eine Aufwärtsträgeruntergruppe und mindestens eine Abwärtsträgeruntergruppe umfasst und die Zuordnungsbeziehung zwischen der Aufwärtsträgeruntergruppe und der Abwärtsträgeruntergruppe eine Originaleinstellung in einem System ist oder in einer Systemanwendung dynamisch zugeteilt wird.

10. eNB nach Anspruch 9, wobei das Trägergruppendefinitionsmodul mindestens eine der folgenden Einheiten umfasst:
eine erste Auslegungseinheit (1411), die dazu ausgelegt ist, kontinuierliche Träger als eine Trägergruppe zu definieren;
eine zweite Definitionseinheit (1412), die dazu ausgelegt ist, diskrete Träger, die als ein selbes Band zu einer Trägergruppe gehören, zu definieren;
eine dritte Definitionseinheit (1413), die dazu ausgelegt ist, einen Aufwärtsträger und einen Abwärtsträger, der dem Aufwärtsträger entspricht, als eine Trägergruppe zu definieren;
eine vierte Definitionseinheit (1414), die dazu ausgelegt ist, Träger gemäß einer Fähigkeit und/oder einer Dienstanforderung einer Teilnehmereinrichtung, UE, zu gruppieren;
eine fünfte Definitionseinheit (1415), die dazu ausgelegt ist, Träger, die eine selbe Zellabdeckung aufweisen, als eine Trägergruppe zu definieren;
eine sechste Definitionseinheit (1416), die dazu ausgelegt ist, Träger, die ein selbes Aufwärts-/Abwärtszeitschlitzverhältnis aufweisen, als eine Trägergruppe zu definieren.

11. eNB nach Anspruch 9 oder 10, wobei das Ressourcenzuteilungsmodul mindestens eine der folgenden Einheiten umfasst:
eine erste Ressourcenzuteilungseinheit (1421), die dazu ausgelegt ist, physische Aufwärtssteuerkanal(PUCCH)-Ressourcen auf einem Aufwärtsträger/-zeitschlitz in einer Trägergruppe für einen Abwärtsträger/-zeitschlitz in der Trägergruppe zum Übertragen von Aufwärtssteuerinformationen zu reservieren;
eine zweite Ressourcenzuteilungseinheit (1422), die dazu ausgelegt ist, physische Hybrid-ARQ-Indikatorkanal(PHICH)-Ressourcen auf einem Abwärtsträger/- zeitschlitz in einer Trägergruppe für einen Aufwärtsträger/-zeitschlitz in der Trägergruppe zum Übertragen von Abwärtssteuerinformationen zu reservieren;
eine dritte Ressourcenzuteilungseinheit (1423), die dazu ausgelegt ist, Funkressourcen zum Übertragen einer Planungszuweisungssignalisierung auf einem oder mehreren Abwärtsträgem in einer Trägergruppe zuzuteilen, wobei die Planungszuweisungssignalisierung verwendet wird, um Planungszuweisungsinformationen einer Datenübertragung auf einem Aufwärtsträger und/oder einem Abwärtsträger in der Trägergruppe anzuzeigen;
eine vierte Ressourcenzuteilungseinheit (1424), die dazu ausgelegt ist, Funkressourcen zum Übertragen einer Planungszuweisungssignalisierung in einem oder mehreren Abwärtszeitschlitzen in einer Trägergruppe zuzuteilen, wobei die Planungszuweisungssignalisierung verwendet wird, um Planungszuweisungsinformationen einer Datenübertragung in einem Aufwärtszeitschlitz und/oder einem Abwärtszeitschlitz in der Trägergruppe anzuzeigen;
eine fünfte Ressourcenzuteilungseinheit (1425), die dazu ausgelegt ist, selbe Ressourcen, die zum Übertragen von Abwärtssteuerinformationen erforderlich sind, für jeden Abwärtsträger/-zeitschlitz in einer Trägergruppe innerhalb einer Übertragungszeiteinheit zuzuteilen;
eine sechste Ressourcenzuteilungseinheit (1426), die dazu ausgelegt ist, Trägerressourcen einer Trägergruppe oder von verschiedenen Trägergruppen gemäß einer Fähigkeit und/oder einer Dienstanforderung der UE für die UE zuzuteilen;
eine siebte Ressourcenzuteilungseinheit (1427), die dazu ausgelegt ist, Funkressourcen zum Senden von Trägergruppeninformationen auf einem oder mehreren Trägern in einer Trägergruppe zuzuteilen;
eine achte Ressourcenzuteilungseinheit (1428), die dazu ausgelegt ist, einen oder mehrere Träger in einer Trägergruppe als Hauptträger zu definieren und Funkressourcen zum Senden von Trägergruppeninformationen eines Systems auf den Hauptträgern zuzuteilen;
eine neunte Ressourcenzuteilungseinheit (1429), die dazu ausgelegt ist, Systemressourcen derart zuzuteilen, dass Daten, die von der UE übertragen werden, zwischen verschiedenen Trägern in einer Trägergruppe übergeben werden; und
eine zehnte Ressourcenzuteilungseinheit (14210), die dazu ausgelegt ist, Systemressourcen zuzuteilen, wenn sich Aufwärts-/Abwärtszeitschlitzverhältnisse von verschiedenen Trägergruppen unterscheiden, derart, dass die UE von einer aktuellen Trägergruppe an eine andere Trägergruppe übergeben wird.

12. Teilnehmereinrichtung, UE, die Folgendes umfasst:
ein Zuteilungsinformationsempfangsmodul (151), das dazu ausgelegt ist, Systemressourcenzuteilungsinformationen zu empfangen, wobei die Zuteilungsinformationen von einem Netzwerk durch Zuteilen von Systemressourcen für definierte mehrere Trägergruppen erhalten werden; und
ein Kommunikationsmodul (152), das dazu ausgelegt ist, die Systemressourcen, die den Zuteilungsinformationen entsprechen, zu verwenden, um mit dem Netzwerk zu kommunizieren;
wobei mehrere Träger gemäß einer voreingestellten Bedingung als mindestens eine Trägergruppe definiert werden, wobei die voreingestellte Bedingung mindestens eines von Folgendem umfasst: Definieren von Trägern, die eine selbe Zellabdeckung aufweisen, als eine Trägergruppe und Definieren von mehreren Trägern, die ein selbes Aufwärts-/Abwärtszeitschlitzverhältnis aufweisen, als eine Trägergruppe und eine Prozedur des Definierens der mehreren Träger als die mindestens eine Trägergruppe gemäß der voreingestellten Bedingung Folgendes umfasst:
Durchführen einer Definition für einen Aufwärtsträger und einen Abwärtsträger, der dem Aufwärtsträger entspricht, gemäß der voreingestellten Bedingung, um die mindestens eine Trägergruppe zu erhalten, wobei jede Trägergruppe mindestens einen Aufwärtsträger und einen Abwärtsträger, der dem Aufwärtsträger entspricht, umfasst; oder
Gruppieren der Aufwärtsträger gemäß der voreingestellten Bedingung, um mindestens eine Aufwärtsträgeruntergruppe zu erhalten; Gruppieren der Abwärtsträger gemäß der voreingestellten Bedingung, um mindestens eine Abwärtsträgeruntergruppe zu erhalten; und Herstellen einer Zuordnungsbeziehung zwischen der Aufwärtsträgeruntergruppe und der Abwärtsträgeruntergruppe, um mindestens eine Trägergruppe zu erhalten, wobei jede Trägergruppe mindestens eine Aufwärtsträgeruntergruppe und mindestens eine Abwärtsträgeruntergruppe umfasst und die Zuordnungsbeziehung zwischen der Aufwärtsträgeruntergruppe und der Abwärtsträgeruntergruppe eine Originaleinstellung in einem System ist oder in einer Systemanwendung dynamisch zugeteilt wird.

## Revendications

1. Procédé d'allocation de ressources, comprenant :
la définition (21) de porteuses multiples en tant qu'au moins un groupe de porteuses selon une condition préétablie, dans lequel la condition préétablie comprend au moins l'une des suivantes : la définition de porteuses qui ont la même couverture cellulaire qu'un groupe de porteuses ; et la définition de porteuses multiples qui ont un même rapport de créneau temporel en liaison montante/liaison descendante en tant qu'un groupe de porteuses ; et
l'allocation (22) de ressources systèmes pour un groupe de porteuses obtenu ;
la notification à un équipement utilisateur, UE, d'informations d'allocation de ressource système, de sorte que les ressources systèmes correspondant aux informations d'allocation sont utilisées pour communiquer avec l'UE ;
dans lequel la définition de porteuses multiples en tant que l'au moins un groupe de porteuses selon la condition préétablie comprend :
la réalisation, selon la condition préétablie, d'une définition pour une porteuse de liaison montante et une porteuse de liaison descendante correspondant à la porteuse de liaison montante pour obtenir l'au moins un groupe de porteuses, dans lequel chaque groupe de porteuses comprend au moins une porteuse de liaison montante et une porteuse de liaison descendante correspondant à la porteuse de liaison montante ; ou
le regroupement, selon la condition préétablie, des porteuses de liaison montante pour obtenir au moins un sous-groupe de porteuses de liaison montante ; le regroupement, selon la condition préétablie, des porteuses de liaison descendante pour obtenir au moins un sous-groupe de porteuses de liaison descendante ; et
l'établissement d'une relation de mise en correspondance entre le sous-groupe de porteuses de liaison montante et le sous-groupe de porteuses de liaison descendante pour obtenir l'au moins un groupe de porteuses, dans lequel chaque groupe de porteuses comprend au moins un sous-groupe de porteuses de liaison montante et au moins un sous-groupe de porteuses de liaison descendante, et la relation de mise en correspondance entre le sous-groupe de porteuses de liaison montante et le sous-groupe de porteuses de liaison descendante est un réglage d'origine dans un système ou est allouée dynamiquement dans une application système.

2. Procédé d'allocation de ressources selon la revendication 1, dans lequel la condition préétablie comprend en outre au moins l'un(e) des suivant(e)s :
la définition de porteuses continues en tant que groupe de porteuses ;
la définition d'une porteuse de liaison montante et d'une porteuse de liaison descendante correspondant à la porteuse de liaison montante en tant que groupe de porteuses ;
le regroupement de porteuses selon une capacité et/ou une exigence de service de l'UE ; et
la définition de porteuses discrètes qui appartiennent à une même bande en tant que groupe de porteuses.

3. Procédé d'allocation de ressources selon la revendication 1 ou 2, dans lequel l'allocation des ressources systèmes pour le groupe de porteuses obtenu comprend lune ou une combinaison quelconque des suivantes :
la réservation, sur une porteuse/un créneau temporel de liaison montante dans un groupe de porteuses, de ressources de canal physique de commande liaison montante, PUCCH, pour une porteuse/un créneau temporel de liaison descendante dans le groupe de porteuses, pour transmettre des informations de commande de liaison montante ;
la réservation, sur une porteuse/un créneau temporel de liaison descendante dans un groupe de porteuses, de ressources de canal physique indicateur ARQ hybride, PHICH, pour une porteuse/un créneau temporel de liaison montante dans le groupe de porteuses, pour transmettre des informations de commande de liaison descendante ;
l'allocation, sur une ou plusieurs porteuses de liaison descendante dans un groupe de porteuses, de ressources radio pour transmettre une signalisation d'attribution d'ordonnancement, dans lequel la signalisation d'attribution d'ordonnancement est utilisée pour indiquer des informations d'attribution d'ordonnancement de transmission de données sur une porteuse de liaison montante et/ou une porteuse de liaison descendante dans le groupe de porteuses ;
l'allocation, sur un ou plusieurs créneaux temporels de liaison descendante dans un groupe de porteuses, de ressources radio pour transmettre une signalisation d'attribution d'ordonnancement, dans lequel la signalisation d'attribution d'ordonnancement est utilisée pour indiquer des informations d'attribution d'ordonnancement de transmission de données sur un créneau temporel de liaison montante et/ou un créneau temporel de liaison descendante dans le groupe de porteuses ;
l'allocation, au sein d'une unité de temps de transmission, des mêmes ressources requises pour transmettre des informations de commande de liaison descendante, pour chaque porteuse/créneau temporel de liaison descendante dans un groupe de porteuses ;
sur une ou plusieurs porteuses dans un groupe de porteuses, l'allocation de ressources radio pour envoyer des informations de groupe de porteuses ;
la définition d'une ou de plusieurs porteuses dans un groupe de porteuses en tant que porteuses principales et l'allocation, sur les porteuses principales, de ressources radio pour envoyer des informations de groupe de porteuses d'un système ;
l'allocation de ressources de porteuses d'un groupe de porteuses ou de groupes de porteuses différents pour l'UE selon une capacité et/ou une exigence de service de l'UE;
l'allocation de ressources systèmes de sorte que des données transmises par l'UE sont transférées entre des porteuses différentes dans un groupe de porteuses ; et
l'allocation de ressources systèmes lorsque des rapports de créneau temporel de liaison montante/liaison descendante de groupes de porteuses différents sont différents, de sorte que l'UE est transféré sur un groupe de porteuses actuel à un autre groupe de porteuses.

4. Procédé d'allocation de ressources selon la revendication 3, dans lequel, l'allocation des mêmes ressources requises pour transmettre les informations de commande de liaison descendante, pour chaque porteuse/créneau temporel de liaison descendante dans le groupe de porteuses, comprend :
la configuration d'une même valeur d'indicateur de format de commande, CFI, pour un canal physique indicateur de format de commande, PCFICH sur chaque porteuse de liaison descendante dans un groupe de porteuses, de sorte que le nombre de symboles de multiplexage par répartition orthogonale de la fréquence, OFDM requis pour transmettre des informations de commande de liaison descendante sur chaque porteuse/créneau temporel de liaison descendante dans le groupe de porteuses est le même.

5. Procédé d'allocation de ressources selon la revendication 4, dans lequel, lorsque des porteuses comprises dans des groupes de porteuses différents sont partiellement les mêmes et qu'une même porteuse est une porteuse de liaison descendante, une valeur CFI de la même porteuse de liaison descendante est configurée pour être la même qu'une valeur CFI d'une autre porteuse de liaison descendante dans tout groupe de porteuse ; ou, une valeur CFI de chaque porteuse de liaison descendante comprise dans chaque groupe de porteuses est configurée à une même valeur.

6. Procédé d'allocation de ressources selon la revendication 3, 4 ou 5, dans lequel l'allocation des ressources de porteuse des groupes de porteuses différents pour l'UE comprend :
l'ordonnancement de ressources systèmes réservées sur chaque porteuse comprise dans des groupes de porteuses différents, pour transmettre des données UE ; ou
la réallocation de ressources de porteuse de groupes de porteuses différents, pour transmettre des données UE.

7. Procédé d'allocation de ressources selon la revendication 3, 4, 5 ou 6, dans lequel les informations d'allocation de ressource système comprennent : un drapeau d'activation d'un transfert intercellulaire de données transmises par l'UE entre des porteuses différentes dans un groupe de porteuses et une nouvelle fréquence pour le transfert intercellulaire.

8. Procédé d'allocation de ressources selon la revendication 7, dans lequel l'allocation de ressources systèmes de sorte que l'UE est transféré d'un groupe de porteuses actuel à un autre groupe de porteuses comprend :
l'allocation, selon une exigence de service de l'UE, des ressources systèmes de sorte que l'UE est transféré du groupe de porteuses actuel à un autre groupe de porteuses ; ou
l'allocation, dans un processus de demande automatique de retransmission hybride, HARQ, de données liées à l'UE, des ressources systèmes de sorte qu'une transmission de données liées à l'UE est transférée du groupe de porteuses actuel à un autre groupe de porteuses.

9. Noeud B évolué, eNB, comprenant :
un module de définition de groupe de porteuses (141), configuré pour définir des porteuses multiples en tant qu'au moins un groupe de porteuses selon une condition préétablie, dans lequel la condition préétablie comprend au moins l'une des suivantes : la définition de porteuses qui ont une même couverture cellulaire en tant qu'un groupe de porteuses ; et la définition de porteuses multiples qui ont un même rapport de créneau temporel de liaison montante/liaison descendante en tant qu'un groupe de porteuses ; et
un module d'allocation de ressource (142), configuré pour allouer des ressources systèmes pour un groupe de porteuses obtenu ;
un module de notification d'informations d'allocation de ressource (143), configuré pour notifier un équipement utilisateur, UE, des informations d'allocation de ressource système correspondantes, de sorte que les ressources systèmes correspondant aux informations d'allocation sont utilisées pour communiquer avec l'UE;
dans lequel le module de définition de groupe de porteuses (141) est configuré pour la définition des porteuses multiples en tant que l'au moins un groupe de porteuses selon la condition préétablie comprend :
le module de définition de groupe de porteuses (141) est configuré pour réaliser, selon la condition préétablie, une définition pour une porteuse de liaison montante et une porteuse de liaison descendante correspondant à la porteuse de liaison montante pour obtenir l'au moins un groupe de porteuses, dans lequel chaque groupe de porteuses comprend au moins une porteuse de liaison montante et une porteuse de liaison descendante correspondant à la porteuse de liaison montante ; ou
le module de définition de groupe de porteuses (141) est configuré pour regrouper, selon la condition préétablie, les porteuses de liaison montante pour obtenir au moins un sous-groupe de porteuses de liaison montante ; regrouper, selon la condition préétablie, les porteuses de liaison descendante pour obtenir au moins un sous-groupe de porteuses de liaison descendante ; et établir une relation de mise en correspondance entre le sous-groupe de porteuses de liaison montante et le sous-groupe de porteuses de liaison descendante pour obtenir l'au moins un groupe de porteuses, dans lequel chaque groupe de porteuses comprend au moins un sous-groupe de porteuses de liaison montante et au moins un sous-groupe de porteuses de liaison descendante, et la relation de mise en correspondance entre le sous-groupe de porteuses de liaison montante et le sous-groupe de porteuses de liaison descendante est un réglage d'origine dans un système ou est allouée dynamiquement dans une application système.

10. eNB selon la revendication 9, dans lequel le module de définition de groupe de porteuses comprend au moins l'une des unités suivantes :
une première unité de configuration (1411), configurée pour définir des porteuses continues en tant que groupe de porteuses ;
une deuxième unité de définition (1412), configurée pour définir des porteuses discrètes qui appartiennent en tant que même bande à un groupe de porteuses ;
une troisième unité de définition (1413), configurée pour définir une porteuse de liaison montante et une porteuse de liaison descendante correspondant à la porteuse de liaison montante en tant que groupe de porteuses ;
une quatrième unité de définition (1414), configurée pour regrouper des porteuses selon une capacité et/ou une exigence de service d'un équipement utilisateur, UE ;
une cinquième unité de définition (1415), configurée pour définir des porteuses qui ont une même couverture cellulaire en tant que groupe de porteuses ;
une sixième unité de définition (1416), configurée pour définir des porteuses qui ont un même rapport de créneau temporel de liaison montante/liaison descendante en tant que groupe de porteuses.

11. eNB selon la revendication 9 ou 10, dans lequel le module d'allocation de ressource comprend au moins l'une des unités suivantes :
une première unité d'allocation de ressource (1421), configurée pour réserver, sur une porteuse/un créneau temporel de liaison montante dans un groupe de porteuses, des ressources de canal physique de commande de liaison montante, PUCCH, pour une porteuse/un créneau temporel de liaison descendante dans le groupe de porteuses, pour transmettre des informations de commande de liaison montante ;
une deuxième unité d'allocation de ressource (1422), configurée pour réserver, sur une porteuse/un créneau temporel de liaison descendante dans un groupe de porteuses, des ressources de canal physique indicateur ARQ hybride, PHICH, pour une porteuse/un créneau temporel de liaison montante dans le groupe de porteuses, pour transmettre des informations de commande de liaison descendante ;
une troisième unité d'allocation de ressource (1423), configurée pour allouer, sur une ou plusieurs porteuses de liaison descendante dans un groupe de porteuses, des ressources radio pour transmettre une signalisation d'attribution d'ordonnancement, dans lequel la signalisation d'attribution d'ordonnancement est utilisée pour indiquer des informations d'attribution d'ordonnancement de transmission de données sur une porteuse de liaison montante et/ou une porteuse de liaison descendante dans le groupe de porteuses ;
une quatrième unité d'allocation de ressource (1424), configurée pour allouer, sur un ou plusieurs créneaux temporels de liaison descendante dans un groupe de porteuses, des ressources radio pour transmettre une signalisation d'attribution d'ordonnancement, dans lequel la signalisation d'attribution d'ordonnancement est utilisée pour indiquer les informations d'attribution d'ordonnancement de transmission de données sur un créneau temporel de liaison montante et/ou un créneau temporel de liaison descendante dans le groupe de porteuses ;
une cinquième unité d'allocation de ressource (1425), configurée pour allouer, au sein d'une unité de temps de transmission, les mêmes ressources requises pour transmettre des informations de commande de liaison descendante, pour chaque porteuse/créneau temporel de liaison descendante dans un groupe de porteuses ;
une sixième unité d'allocation de ressource (1426), configurée pour allouer, selon une capacité et/ou une exigence de service d'un UE, des ressources de porteuse d'un groupe de porteuses ou de groupes de porteuses différents pour l'UE ;
une septième unité d'allocation de ressource (1427), configurée pour allouer, sur une ou plusieurs porteuses dans un groupe de porteuses, des ressources radio pour envoyer des informations de groupe de porteuses ;
une huitième unité d'allocation de ressource (1428), configurée pour définir une ou plusieurs porteuses dans un groupe de porteuses en tant que porteuses principales et allouer, sur les porteuses principales, des ressources radio pour envoyer des informations de groupe de porteuses d'un système ;
une neuvième unité d'allocation de ressource (1429), configurée pour allouer des ressources systèmes de sorte que des données transmises par l'UE sont transférées entre des porteuses différentes dans un groupe de porteuses ; et
une dixième unité d'allocation de ressource (14210), configurée pour allouer des ressources systèmes lorsque des rapports de créneau temporel de liaison montante/liaison descendante de groupes de porteuses différents sont différents, de sorte que l'UE est transféré d'un groupe de porteuses actuel à un autre groupe de porteuses.

12. Equipement utilisateur, UE, comprenant :
un module de réception d'informations d'allocation (151), configuré pour recevoir des informations d'allocation de ressource système, dans lequel les informations d'allocation sont obtenues par un réseau en allouant des ressources systèmes pour des groupes de porteuses multiples définis ; et
un module de communication (152), configuré pour utiliser les ressources systèmes correspondant aux informations d'allocation pour communiquer avec le réseau ;
dans lequel, des porteuses multiples sont définies en tant qu'au moins un groupe de porteuses selon une condition préétablie, dans lequel la condition préétablie comprend au moins l'une des suivantes : la définition de porteuses qui ont une même couverture cellulaire en tant que groupe de porteuses ; et la définition de porteuses multiples qui ont un même rapport de créneau temporel de liaison montante/liaison descendante en tant que groupe de porteuses, et une procédure de définition des multiples porteuses en tant que l'au moins un groupe de porteuses selon la condition préétablie comprend :
la réalisation, selon la condition préétablie, d'une définition pour une porteuse de liaison montante et une porteuse de liaison descendante correspondant à la porteuse de liaison montante pour obtenir l'au moins un groupe de porteuses, dans lequel chaque groupe de porteuses comprend au moins une porteuse de liaison montante et une porteuse de liaison descendante correspondant à la porteuse de liaison montante ; ou
le regroupement, selon la condition préétablie, des porteuses de liaison montante pour obtenir au moins un sous-groupe de porteuses de liaison montante ; le regroupement, selon la condition préétablie, des porteuses de liaison descendante pour obtenir au moins un sous-groupe de porteuses de liaison descendante ; et l'établissement d'une relation de mise en correspondance entre le sous-groupe de porteuses de liaison montante et le sous-groupe de porteuses de liaison descendante pour obtenir l'au moins un groupe de porteuses, dans lequel chaque groupe de porteuses comprend au moins un sous-groupe de porteuses de liaison montante et au moins un sous-groupe de porteuses de liaison descendante, et la relation de mise en correspondance entre le sous-groupe de porteuses de liaison montante et le sous-groupe de porteuses de liaison descendante est un réglage d'origine dans un système ou est allouée dynamiquement dans une application système.
